# EUROPEAN PATENT APPLICATION

(11) **EP 4 822 174 A1**
(43) Date of publication of application: **14.10.2026**
(21) Application number: 24911546.0
(22) Date of filing: 27.12.2024
(51) Int. Cl.: F03D 80/40

(54) **BLADE, WIND TURBINE, AND MOUNTING METHOD FOR BLADE HEATING PREFABRICATED COMPONENT**

(30) Priority: 29.12.2023 CN 202311868952; 29.12.2023 CN 202323661889 U; 29.12.2023 CN 202311871844; 29.12.2023 CN 202311871748
(71) Applicant: Jiangsu Goldwind Science & Technology Co., Ltd., Yancheng, Jiangsu 224100 (CN)
(72) Inventor: FU, Lei, Beijing 100176 (CN); LI, Quanzhou, Beijing 100176 (CN); YANG, Jianjun, Beijing 100176 (CN); XU, Cheng, Beijing 100176 (CN); SHI, Chaofeng, Beijing 100176 (CN)
(74) Representative: Gulde & Partner
(86) International application number: PCT/CN2024/143380
(87) International publication number: WO 2025/140630

(57) **Abstract**

The present application relates to a heating portion, a heating prefabricated member, a deicing device, a blade, a wind turbine generator set and a mounting method of a heating prefabricated member of a blade. The heating prefabricated member includes the heating portion and a first protective portion, the first protective portion and the heating portion are stacked, the first protective portion covers the heating portion, the heating prefabricated member is connected to the blade through the heating portion, and the heating portion is configured to provide heat to the blade.

## Description

### CROSS REFERENCE TO RELATED APPLICATION

The present application claims priority to Chinese Patent Application No. 202311871844.9, titled "Blade deicing device, heating body, blade and wind turbine generator set" and filed on December 29, 2023, priority to Chinese Patent Application No. 202311868952.0, titled "Mounting method of blade deicing device, blade and wind turbine generator set" and filed on December 29, 2023, priority to Chinese Patent Application No. 202311871748.4, titled "Maintenance method of blade and vacuum sealing member" and filed on December 29, 2023, and priority to Chinese Patent Application No. 202323661889.1, titled "Heating prefabricated member of blade, blade and wind turbine generator set" and filed on December 29, 2023, which are hereby incorporated by reference in their entireties.

### TECHNICAL FIELD

The present application relates to the technical field of wind power, and in particular relates to a heating portion, a heating prefabricated member, a deicing device, a blade, a wind turbine generator set and a mounting method for a heating prefabricated member of a blade.

### BACKGROUND

In a region with freezing rain or extreme low temperature, after a surface of a blade of a wind turbine generator set is covered with ice, an aerodynamic shape of the blade will be changed, which may reduce the aerodynamic efficiency, and thus cause a loss of power generation. Therefore, it is often necessary to heat the blade to achieve the object of deicing.

However, the surface of a housing of the blade is often covered with ice at the plurality of different locations simultaneously, and the locations of the ice accretion show a high degree of randomness. When only a local area of the housing of the blade is heated, it is often impossible to achieve the deicing for the plurality of regions of the blade, resulting in an insufficient deicing process and poor deicing performance.

The heating material can be placed on the blade. By supplying power to the heating material, the object of deicing can be achieved. This approach has been proven to be one of the effective solutions for the deicing of the blade.

The electric heating deicing schemes for blade in the prior art mainly include two types: a first scheme involves placing the heating material during the blade manufacturing process, integrating a heating device into the housing of the blade through infusion molding process; however, the pre-embedded molding must be fabricated in the mold during blade manufacturing process; China has built a large number of wind power plants, and the early blades did not incorporate the heating deicing devices during the manufacturing process, and thus large number of in-service blades cannot be effectively deiced; a second scheme involves retrofitting the blades of the existing generator sets by removing them from the generator sets and fixing the blade heating materials to the blade surface through vacuum infusion or hand lay-up molding; however, the wind turbines are the large-scale devices, and most of the towers of the wind turbine generator sets in China are between 80 and 120 meters in height, the towers of the large-scale generator sets may be even over 150 meters in height, and the blades may be between 40 and 90 meters in length. Thus, dismantling the blades from wind turbine generator sets incurs extremely high costs. Furthermore, once the heating potions of the blades produced by these two schemes are damaged by lightning strikes, they are very difficult to repair.

### SUMMARY

The present application provides a heating unit, a heating prefabricated member, a deicing device, a mounting method of a heating prefabricated member of a blade, a blade and a wind turbine generator set, which can heat and deice a plurality of positions of a housing of the blade simultaneously, enhance the deicing capability of the blade and ensure more thorough deicing for the blade.

In a first aspect, embodiments of the present application provide a heating prefabricated member for heating a blade of a wind turbine generator set. The heating prefabricated member includes a heating portion and a first protective portion, the first protective portion and the heating portion are stacked, the first protective portion covers the heating portion, the heating prefabricated member is connected to the blade through the heating portion, and the heating portion is configured to provide heat to the blade.

In a second aspect, embodiments of the present application further provide a heating portion for heating a housing of a blade. The housing includes a first region and a second region, the first region includes a windward region, and the second region includes a leeward region; the heating portion includes a first heating section and a second heating section spaced apart from each other, the first heating section is arranged in the first region, and the second heating section is arranged in the second region.

In a third aspect, embodiments of the present application provide a deicing device, including a plurality of heating prefabricated members as described above, and the plurality of heating prefabricated members being connected in parallel, or including a plurality of heating portions as described above, and the plurality of heating portions being connected in parallel.

In a fourth aspect, embodiments of the present application provide a mounting method of a heating prefabricated member of a blade including: providing a housing, the housing including an internal cavity, and the housing including an inner surface formed towards the internal cavity and an outer surface formed away from the internal cavity;
providing a heating prefabricated member, and arranging an adhesive portion on at least one of the outer surface and the heating prefabricated member, the heating prefabricated member being configured to provide heat to the housing;
adhering the heating prefabricated member to the outer surface through the adhesive portion; and
fixing the heating prefabricated member onto the housing by a binding portion, and bonding the heating prefabricated member to the outer surface of the housing through the adhesive portion.

In a fifth aspect, embodiments of the present application provide a mounting method of a heating prefabricated member of a blade including: providing a housing, the housing including an internal cavity, and the housing including an inner surface formed towards the internal cavity and an outer surface formed away from the internal cavity; providing a heating prefabricated member, and arranging an adhesive portion on at least one of the outer surface and the heating prefabricated member; adhering the heating prefabricated member and the outer surface together through the adhesive portion; enveloping a vacuum sealing member on a side of the heating prefabricated member away from the adhesive portion, and forming a sealing cavity between the vacuum sealing member and the outer surface to enclose the heating prefabricated member; and performing a vacuum pumping treatment on the sealing cavity, an external atmospheric pressure compressing the heating prefabricated member through the vacuum sealing member to adhere the heating prefabricated member to the outer surface through the adhesive portion.

In a sixth aspect, embodiments of the present application provide a blade, the blade is provided with a deicing device mounted by the mounting method as described above, or the blade is maintained by the mounting method as described above.

In a seventh aspect, embodiments of the present application provide a wind turbine generator set, and the wind turbine generator set includes the blade as described above.

### BRIEF DESCRIPTION OF THE DRAWINGS

The features, advantages and technical effects of the exemplary embodiments of the present application will be described below with reference to the drawings, which are not drawn to actual scale.
Fig. 1 shows a structural schematic view of a deicing device in a blade according to an embodiment of the present application;
Fig. 2 shows a schematic cross-sectional view on line N-N in Fig. 1;
Fig. 3 shows a partial enlarged schematic view at point A in Fig. 2;
Fig. 4 shows another partial enlarged schematic view at point A in Fig. 2;
Fig. 5 shows a structural schematic view of another deicing device according to an embodiment of the present application;
Fig. 6 shows a structural schematic view of another deicing device according to an embodiment of the present application;
Fig. 7 shows a structural schematic view of another deicing device according to an embodiment of the present application;
Fig. 8 shows a structural schematic view of another deicing device according to an embodiment of the present application;
Fig. 9 shows a structural schematic view of another deicing device according to an embodiment of the present application;
Fig. 10 shows a structural schematic view of another deicing device according to an embodiment of the present application;
Fig. 11 shows a structural schematic view of another deicing device according to an embodiment of the present application;
Fig. 12 shows a flowchart of a method for manufacturing a blade according to an embodiment of the present application;
Fig. 13 shows a structural schematic view of a blade in a manufacturing process according to an embodiment of the present application;
Fig. 14 shows a structural schematic view of a blade in a manufacturing process according to an embodiment of the present application;
Fig. 15 shows a structural schematic view of a blade in a manufacturing process according to an embodiment of the present application;
Fig. 16 shows a schematic view of a side structure of Fig. 15;
Fig. 17 shows a flowchart of another method for manufacturing a blade according to an embodiment of the present application;
Fig. 18 shows a structural schematic view of a blade in a manufacturing process according to an embodiment of the present application;
Fig. 19 shows a structural schematic view of a blade in a manufacturing process according to an embodiment of the present application;
Fig. 20 shows a structural schematic view of a blade in a manufacturing process according to an embodiment of the present application;
Fig. 21 shows a mounting flowchart of a heating prefabricated member according to an embodiment of the present application;
Fig. 22 shows a structural schematic view of a blade in a maintenance process according to an embodiment of the present application;
Fig. 23 shows a mounting flowchart of another heating prefabricated member according to an embodiment of the present application;
Fig. 24 shows a structural schematic view of a blade in a maintenance process according to an embodiment of the present application;
Fig. 25 shows a structural schematic view of a blade in a maintenance process, according to an embodiment of the present application; and
Fig. 26 shows a structural schematic view of a blade in a maintenance process according to an embodiment of the present application.

### Reference numerals:

100-blade; 101-blade root; 102-blade tip;
103-housing; 104-leading edge; 105-trailing edge; 20-heating prefabricated member; 21-heating portion; 22-first connecting portion; 23-first protective portion; 24-first layer; 25-second layer; 30-conductive prefabricated member; 31-first conductive prefabricated member; 32-second conductive prefabricated member; 80-lightning protection prefabricated member.
106-first region; 107-second region;
211-first heating section; 212-second heating section; 213-heating sub-section;
214-conductor; 2141-first trace; 2142-second trace; 2141a-first main trace; 2141b-first branch trace; 2142a-second main trace; 2142b-second branch trace.
X-length direction;
26-adhesive portion; 40-binding portion; 41-binding strip; 50-crimping portion; 51-support bar; 60-linking portion.
70-vacuum sealing member; 71-first engaging portion; 72-second engaging portion; 73-carrier film; 74-air-extracting port; 75-sealing portion.

### DETAILED DESCRIPTION

The features and exemplary embodiments of various aspects of the present application will be described in detail below. In the detailed description below, many specific details are presented to facilitate a comprehensive understanding of the present application. However, it is apparent to those skilled in the art that the present application can be implemented without requiring some of these specific details. The description of the embodiments below is merely intended to provide a better understanding of the present application by illustrating examples of the present application. In the drawings and the following description, at least some well-known structures and techniques are not shown in order to avoid unnecessary ambiguity to the present application; and in order to be clearer, the dimensions of some structures may be exaggerated. Furthermore, the features, structures or characteristics described below may be combined in any suitable manner in one or more embodiments.

The directional terms mentioned in the following description refer to the directions shown in the drawings, and do not limit the specific structures of the blade heating and conductive prefabricated member, blade or wind turbine generator set described in the present application. In the description of the present application, it should also be noted that unless otherwise explicitly specified and limited, the terms "mounting" and "connection" should be broadly understood. For example, they may mean fixed connection, detachable connection or integral connection; and they may mean direct connection or indirect connection. For those skilled in the art, the specific meanings of the above terms in the present application can be understood based on the specific situation.

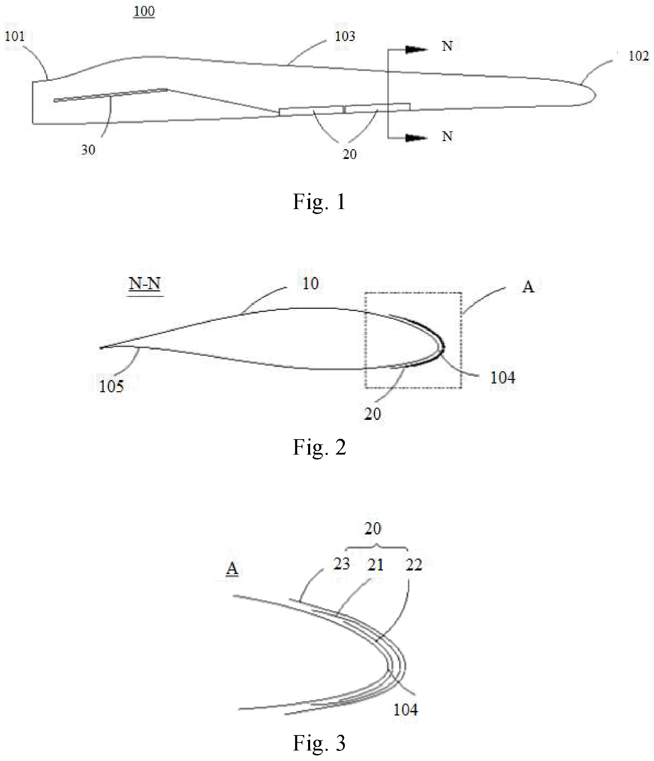

In order to better understand the present application, the blade heating and conductive prefabricated member, blade and wind turbine generator set of an embodiment of the present application will be described in detail below with reference to Figs. 1 to 7.

Referring to Figs. 1 and 2, an embodiment of the present application provides a blade 100 including a blade root 101 and a blade tip 102. The blade 100 includes a housing 103, a heating prefabricated member 20 and a conductive prefabricated member 30. The housing 103 has an internal cavity, and includes an inner surface towards the internal cavity and an outer surface away from the internal cavity. The heating prefabricated member 20 is laid on at least one of the inner surface and outer surface and is connected to the housing 103. As shown in Fig. 3, the heating prefabricated member 20 includes a first protective portion 23 and a heating portion 21, and the first protective portion 23 covers the heating portion 21 on the housing 103. The heating prefabricated member 20 is configured to provide heat to the housing 103.

In this embodiment, the housing 103 and the heating prefabricated member 20 of the blade 100 are two independent structures and are separately formed. After the housing 103 is molded through an infusion process, the preformed heating prefabricated member 20 is laid on a surface of the housing 103, so as to form a stable connection between the heating prefabricated member and the housing to obtain the final structure of the blade 100. The heating capacity of the heating prefabricated member 20 can be utilized to heat the housing 103, thereby achieving the deicing effect on the surface of the housing 103.

The housing 103 has the inner surface and the outer surface which are opposite to each other. After obtaining the preformed heating prefabricated member 20, it can be laid on the inner surface or outer surface. Generally, the heating prefabricated member 20 should be laid on the outer surface to obtain the better deicing effect, because when the external temperature is low, the ice is usually formed on the outer surface of the housing 103. The heating prefabricated member 20 on the outer surface can directly heat the ice. When the heating prefabricated member 20 is laid on the inner surface, the generated heat needs to be conducted through the housing 103, which may cause partial heat loss, be not conducive to the heat conduction, and thus lead to the poor deicing effect.

Optionally, the conductive prefabricated member 30 may be arranged in the housing 103 to supply power to the heating prefabricated member 20. A specific position of the conductive prefabricated member 30 in the housing 103 may be not specifically limited in the present application, as long as it can ensure the electrical connection between the conductive prefabricated member 30 and the heating prefabricated member 20 to supply power to the heating prefabricated member.

Typically, the conductive prefabricated member 30 may need to be connected with the power supply inside the generator set, which can utilize a first wiring terminal of the conductive prefabricated member 30 to connect with heating prefabricated member 20, and utilize a second wiring terminal of the conductive prefabricated member 30 to connect with the power supply, thereby enabling current to be conducted from the power supply to the heating prefabricated member 20. The conductive prefabricated member 30 can be used to transmit current.

Considering that the power supply is typically located at the blade root 101, the conductive prefabricated member 30 can be positioned near the blade root 101 of the housing 103 to facilitate connection with the power source. Typically, the conductive prefabricated member 30 is placed in the internal cavity of the housing 103 to provide better isolation and protection for the conductive prefabricated member 30. Meanwhile, considering the effect of airflow, the blade tip 102 of the housing 103 is more prone to icing compared to the blade root 101. Therefore, the heating prefabricated member 20 can be laid at a position near the blade tip 102 for more targeted deicing.

Optionally, the position and area of the heating prefabricated member 20 can be set according to different actual needs, and can be flexibly selected based on the actual icing conditions. The present application does not impose any special restrictions on the laying position and the area size of the heating prefabricated member 20.

An embodiment of the present application provides the blade 100, the heating prefabricated member 20 can laid on the inner surface or outer surface of the housing 103 of the blade 100, so that the housing 103 and the heating prefabricated member 20 can be formed as two separate components, thereby simplifying the molding process of the blade 100. The formed heating prefabricated member 20 can be simply directly laid on the housing 103 for heating. On the basis of using the heat from the heating process to deice the housing 103, the reliability of the connection between the heating prefabricated member 20 and the housing 103 can be improved, the problem of unstable bonding caused by complex processes can be avoided and the better deicing effect can be achieved. Additionally, by preforming the heating prefabricated member 20 and then directly laying it on the housing 103, the difficulty of the process can be reduced, and the manufacturing efficiency can be improved. In addition, it is also conducive to completing the operations at heights, providing a better manufacturing flexibility, reducing the downtime of the generator set, reducing the impact on the power generation of the generator set, and resulting in better economic benefits.

According to an alternative embodiment, the heating prefabricated member 20 and/or the conductive prefabricated member 30 are adhesively connected to at least one of the inner surface and the outer surface.

Optionally, after the housing 103 and the heating prefabricated member 20 are formed separately, a structural adhesive can be used to adhere the heating prefabricated member 20 to the surface of the housing 103. In the present application, the example of adhering the heating prefabricated member 20 to the outer surface will be provided for illustration.

Specifically, the structural adhesive can be applied to the surface of the housing 103 firstly, the heating prefabricated member 20 can be adhered at the structural adhesive, and then the heating prefabricated member 20 can be fixed to the surface of the housing 103 by the tools such as a vacuum film or binding strip, and finally the final structure of the blade 100 can be achieved, and the performance of deicing of the surface of the blade 100 can be achieved.

An embodiment of the present application provides the blade 100, the heating prefabricated member 20 is laid on the surface of the housing 103 by means of adhering, which can simplify the forming process of the blade 100, facilitate the manufacture of the blade 100, and improve the manufacturing efficiency. The means of adhering provides a greater flexibility, so that a more reliable connection between the heating prefabricated member 20 and the housing 103 can be achieved, and the deicing effect on the surface of the blade 100 can be improved.

As an alternative embodiment, referring to Fig. 3, the heating prefabricated member 20 includes a heating portion 21 and a first connecting portion 22. The first connecting portion 22 and the heating portion 21 are stacked, and the heating prefabricated member 20 is adhered to the housing 103 through the first connecting portion 22.

The first connecting portion 22 primarily serves to be contact with the surface of the housing 103. By utilizing the contact between the first connecting portion 22 and the surface of the housing 103, it can facilitate the connection between the prefabricated member as a whole and the housing 103, and prevent damage caused by direct contact between the heating portion 21 and the surface of the housing 103. At the same time, the first connecting portion 22 enables a more reliable connection with the surface of the housing 103.

An embodiment of the present application provides the blade 100. The blade 100 provides a specific structural form of the heating prefabricated member 20, so that the heating prefabricated member 20 can be formed more easily to shape and obtain a more reliable connection with the housing 103.

As an alternative embodiment, referring to Fig. 3, the heating prefabricated member 20 further includes a first protective portion 23. The first protective portion 23 and the heating portion 21 are stacked, the first protective portion 23 is arranged a side of the heating portion 21 away from the first connecting portion 22, and the first protective portion 23 covers the heating portion 21.

Optionally, the first protective portion 23 can also be arranged on the heating portion 21, so that the first protective portion, the heating portion 21 and the first connecting portion 22 can together form a three-layer structure. The first protective portion 23 covers the heating portion 21 to provide the isolation and protection for the heating portion 21.

An embodiment of the present application provides the blade 100. The blade 100 provides a specific structural form of another heating prefabricated member 20. By arranging the first protective portion 23 on the heating portion 21, the heating portion 21 is covered and protected, thereby preventing the heating portion 21 from being exposed to the external environment, and avoiding the heat loss and the structural wear.

As an alternative embodiment, the first connecting portion 22 and the first protective portion 23 includes glass cloths, and the heating portion 21 includes a carbon fiber resistance wire.

Considering that the glass cloths are more compatible with the material of the housing 103, the first connecting portion 22 and the first protective portion 23 can be made of the material of glass cloth in this embodiment, so that a more stable connection between the heating prefabricated member 20 and the housing 103 can be obtained. Meanwhile, the heating portion 21 adopts the carbon fiber resistance wire, which has a better electric heating efficiency. Of course, the heating material, such as grapheme, can also be used. The present application does not specifically limit the specific materials of the first connecting portion 22, the first protective portion 23 and the heating portion 21, and the materials can be selected according to different practical needs.

In the blade 100 provided by the embodiment of the present application, the specific materials of respective layers of the heating prefabricated member 20 are provided, so that the materials of the heating prefabricated member 20 can be more compatible with the material of the housing 103, the reliable connection can be obtained, a higher heating efficiency can be achieved, and the deicing ability on the surface of the housing 103 can be improved.

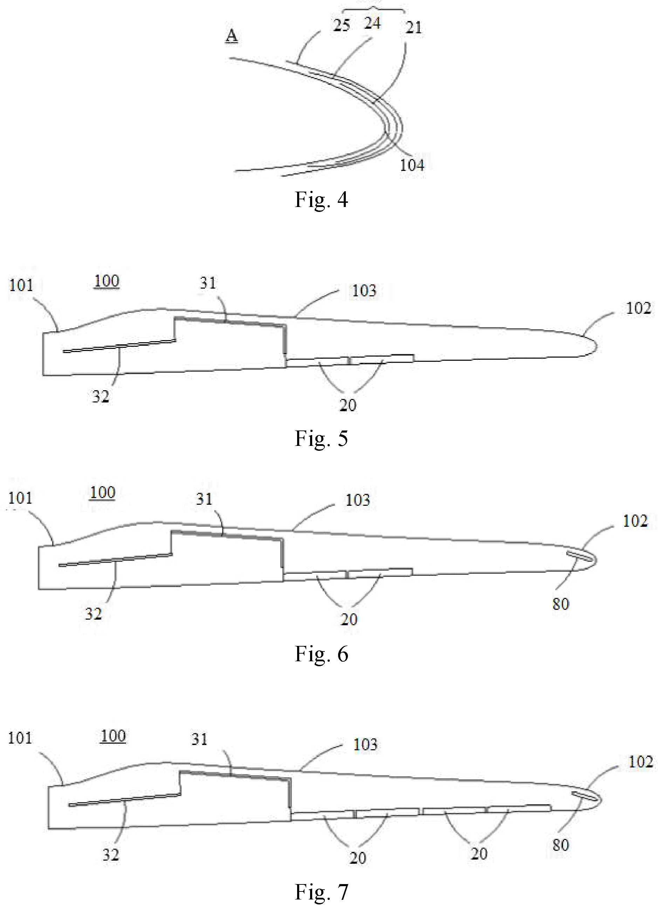

As an alternative embodiment, referring to Fig. 4, the first protective portion 23 includes a first layer 24 and a second layer 25 which are stacked, and the first layer 24 is located between the second layer 25 and the heating portion 21.

Optionally, the first protective portion 23 can be designed as a double-layer laminated structure including the first layer 24 and the second layer 25. The first layer 24 can be used to be direct contact with and cover the heating portion 21, and then the second layer 25 can be used to be direct contact with and cover the first layer 24, so as to achieve the dual isolation protection for the heating portion 21.

This embodiment takes an example of setting the first protective portion 23 as the double-layer structure for illustration, and is not limited to the laminated structure of the first layer 24 and the second layer 25. The specific structure of the first protective part 23 can be adjusted according to actual needs, and is not particularly limited in the present application.

The blade 100 provided in the embodiment of the present application forms a double-layer isolation protection for the heating portion 21 by arranging the first protective portion 23 as the laminated structure of the first layer 24 and the second layer 25, so that the heating portion 21 can better transfer heat to the housing 103, reduce the heat loss, and achieve the better deicing effect.

As an alternative embodiment, the conductive prefabricated member 30 is adhesively connected to the housing 103.

Optionally, similar to the heating prefabricated member 20, the conductive prefabricated member 30 can be adhered to the surface of the housing 103 to achieve the connection between the conductive prefabricated member 30 and the housing 103, so that the connection of the conductive prefabricated member 30 has a better stability.

The conductive prefabricated member 30 can usually be adhered to the inner surface of the housing 103, thereby providing isolation and protection to the conductive prefabricated member 30. It also facilitates the connection between the conductive prefabricated member 30 and the power supply within the internal cavity.

In the blade 100 provided in the embodiment of the present application, by adhering the conductive prefabricated member 30 to the housing 103, it is easy to assemble the conductive prefabricated member 30, simplify the process flow, reduce the difficulty of the process, and form a more stable current conduction for the heating prefabricated member 20.

As an alternative embodiment, the conductive prefabricated member 30 includes a conductive portion and a second connecting portion. The second connecting portion and the conductive portion are stacked. The conductive prefabricated member 30 is adhered to the housing 103 through the second connecting portion, and the conductive portion has a first connecting end and a second connecting end.

Optionally, the conductive prefabricated member 30 can also be designed in a form of a prefabricated member. The specific structure is that the conductive portion is stacked on the second connecting portion. After obtaining a separately formed prefabricated member 30, the second connecting portion is used to adhere the housing 103. Since the prefabricated structure of the conductive prefabricated member 30 is similar to the structure of the aforementioned heating prefabricated member 20, the specific structural form of the conductive prefabricated member 30 can analogously refer to Fig. 3, which will not be repeated here.

Specifically, the conductive portion has the function of conducting current. Specifically, the first wiring terminal and the second wiring terminal are located on the conductive portion, and the conductive portion is connected between the power supply and the heating prefabricated member 20 to conduct current.

An embodiment of the present application provides the blade 100. The conductive prefabricated member 30 is configured as a prefabricated structure, which can simplify the forming process of the housing 103, and facilitate the connection between the conductive prefabricated member 30 and the heating prefabricated member 20 be means of adhesion. Thus, the connection between the conductive prefabricated member and the heating prefabricated member has better stability, thereby further improving the reliability of the structure.

As an alternative embodiment, the conductive prefabricated member 30 further includes a second protective portion. The second protective portion is stacked on the side of the conductive portion away from the second connecting portion, and the second protective portion covers the conductive portion.

Similarly, the second protective portion can also be arranged on the conductive portion, so that the second protective portion, the conductive portion and the second connecting portion can together form a three-layer structure. The second protective portion covers the conductive portion, thereby providing isolation and protection for the conductive portion.

In the blade 100 provided by the embodiment of the present application, a specific structural form of the conductive prefabricated member 30 is provided. By arranging the second protective portion on the conductive portion, a covering protection is formed for the conductive portion, thereby preventing the conductive portion from being exposed to the external environment and thus preventing structural wear.

As an alternative embodiment, the second connecting portion and the second protective portion include glass cloths, and the conductive portion includes a conductive wire.

Considering that the glass cloth is more compatible with the material of the housing 103, in this embodiment, the second connecting portion and the second protective portion can be made of the material of glass cloth, so that a more stable connection between the prefabricated conductive prefabricated member 30 and the housing 103 cam be achieved. At the same time, the conductive portion adopts the conductive wire. When the conductive prefabricated member 30 is adhered to the inner surface of the housing 103, there is no need to consider surface flatness. The conductive portion may adopt the circular conductive wire, which can facilitate conducting the current to the heating prefabricated member 20. The present application does not limit the specific structural materials of the second connecting portion, the second protective portion and the conductive portion, and the materials can be selected according to different practical needs.

In the blade 100 provided the embodiment of the present application, the specific materials for respective layers of the preformed conductive prefabricated member 30 are provided, so that the materials of the conductive prefabricated member 30 can be more compatible with the material of the housing 103, the reliable connection can be obtained, and the reliability of the structure can be further improved.

As an alternative embodiment, referring to Fig. 5, the blade 100 includes a plurality of conductive prefabricated members 30. The plurality of conductive prefabricated members 30 include a first conductive prefabricated member 31 and a second conductive prefabricated member 32 that are interconnected. The first conductive prefabricated member 31 is arranged at the housing 103 and positioned between the heating prefabricated member 20 and the second conductive prefabricated member 32. One end of the first conductive prefabricated member 31 is connected to the first wiring terminal, and the other end is connected to the heating prefabricated member 20.

Considering that when the distance between the second conductive prefabricated member 32 and the heating prefabricated member 20 is relatively large, the direct connection between the second conductive prefabricated member and the heating prefabricated member cannot be achieved. In order to establish a stable connection between the second conductive prefabricated member and the heating prefabricated member, the first conductive prefabricated member 31 can be placed between the second conductive prefabricated member and the heating prefabricated member to form a transfer, so as to ensure that the current can continue to be conducted to the heating prefabricated member 20 through the first conductive prefabricated member 31.

Optionally, since the second conductive prefabricated member 32 is typically arranged at the blade root 101 and the heating prefabricated member 20 is typically arranged at the blade tip 102, in order to facilitate the transition between the second conductive prefabricated member and the heating prefabricated member, the first conductive prefabricated member 31 can be arranged at a mid-blade location of the housing 103. The specific location can be determined based on actual needs.

The first conductive prefabricated member 31 and the second conductive prefabricated member 32 have the same function, both of which are used to transmit current. Depending on the distance between the second conductive prefabricated member 32 and the heating prefabricated member 20, different numbers of first conductive prefabricated members 31 can be set to achieve current transfer, so as to ensure that the current at the power supply can be stably conducted to the heating prefabricated member 20.

In the blade 100 provided by the embodiment of the present application, by arranging the first conductive prefabricated member 31 on the housing 103, the connection between the second conductive prefabricated member 32 and the heating prefabricated member 20 can be achieved, so as to solve the problem of inability of the direct connection between the second conductive prefabricated member and the heating prefabricated member due to the large distance between the two member, so that the stability in current conduction can be better and reliable guarantee for sustainable deicing capability can be obtained.

According to an alternative embodiment, the first conductive prefabricated member 31 is adhesively connected to the housing 103.

Alternatively, the first conductive prefabricated member 31 can also be connected to the housing 103 by means of adhesion, thereby facilitating the assembly of the first conductive prefabricated member 31 and obtaining the better stability.

Optionally, the first conductive prefabricated member 31 can be adhered to the inner surface or outer surface of the housing 103 according to different requirements, as long as the connection between the second conductive prefabricated member 32 and the heating prefabricated member 20 can be formed.

In the blade 100 provided by the embodiment of the present application, by using the adhesion process to form the connection of the housing 103, the process flow can be simplified, the reliable connection between the two can be achieved, and the structural stability can be better.

As an alternative embodiment, the first conductive prefabricated member 31 can also be designed in a form of a prefabricated member. The specific structure is that the conductive portion is stacked on the second connecting portion. After obtaining a separately formed prefabricated member, the second connecting portion is used to adhere the housing 103. Since the prefabricated structure of first conductive prefabricated member 31 is similar to the structure of the aforementioned heating prefabricated member 20, the specific structural form of first conductive prefabricated member 31 can analogously refer to Fig. 3, which will not be repeated here.

Specifically, the conductive portion has the function of conducting current. Specifically, the first wiring terminal is connected to the conductive portion, and the conductive portion of the first conductive prefabricated member 31 is connected between the second conductive prefabricated member 32 and the heating prefabricated member 20 to conduct current.

In the blade 100 provided by the embodiment of the present application, by setting the first conductive prefabricated member 31 as a prefabricated structure, the forming process of the housing 103 can be further simplified, thereby facilitating the connection between the first conductive prefabricated member 31 and the heating prefabricated member 20 by means of adhesion, providing better stability of the connection between the second conductive prefabricated member 32 and the heating prefabricated member 20, and further improving the reliability of the structure.

As an alternative embodiment, referring to Figs. 2-4, the housing 103 includes leading edge 104 and trailing edge 105 which are opposite to each other. The thickness of the heating prefabricated member 20 shows a decreasing trend in the direction from the leading edge 104 towards the trailing edge 105.

In the blade 100 provided by the embodiment of the present application, by adjusting the thickness of the heating prefabricated member 20, the thickness of the heating prefabricated member 20 gradually decreases in the direction from the leading edge 104 to the trailing edge 105, so as to better conform to the shape of the housing 103, fit the contour shape of the housing 103, and achieve a more reliable connection of the housing 103.

As an alternative embodiment, referring to Fig. 3, the heating prefabricated member 20 further includes a first connecting portion 22, which is stacked on a side of the heating portion 21 away from the first protective portion 23. The first protective portion 23 covers and extends beyond the heating portion 21, and the heating portion 21 covers and extends beyond the first connecting portion 22.

In this embodiment, by adjusting the dimensions of respective layers in the three-layer structure of the heating prefabricated member 20 to create differences in the coverage range, a stepped height-difference structure can be obtained, so as to achieve a gradual thinning from the leading edge 104 towards the trailing edge 105, and fit the outer contour of the housing 103.

Specifically, the first protective portion 23 can be utilized to cover the heating portion 21, and the coverage range of the first protective portion 23 can exceed the coverage range of the heating portion 21; then the heating portion 21 can be utilized to cover the first connecting portion 22, and the coverage range of the heating portion 21 can exceed the coverage range of the first connecting portion 22, so that the thickness of the heating prefabricated member 20 at a position of the leading edge 104 is relatively large, and the thickness of the heating prefabricated member extending to a position of the trailing edge 105 gradually decreases.

In the blade 100 provided by the embodiment of the present application, by differentiating the coverage range of the three-layer structure of the heating prefabricated member 20, the thickness of the heating prefabricated member 20 from the leading edge 104 to the trailing edge 105 tends to decrease. Thus, the heating prefabricated member 20 may have a better connection performance and protection performance, and conform to the outer contour of the housing 103, so as to form a more stable fitting connection.

As an alternative embodiment, referring to Fig. 4, the first protective portion 23 includes a first layer 24 and a second layer 25 which are stacked. The first layer 24 is located between the second layer 25 and the heating portion 21, the first layer 24 covers and extends beyond the heating portion 21, and the second layer 25 covers and extends beyond the first layer 24.

In this embodiment, by adjusting the dimensions of respective layers in the three-layer structure of the heating prefabricated member 20 to create differences in the coverage range, a stepped height-difference structure can be obtained, so as to achieve a gradual thinning from the leading edge 104 towards the trailing edge 105, and fit the outer contour of the housing 103.

Specifically, the double-layer structure of the first protective portion 23 can be utilized to cover the heating portion 21, such that the coverage range of the second layer 25 in the first protective portion 23 can exceed the coverage range of the first layer 24. Then, the first layer 24 is direct contact with and covers the heating portion 21, such that the coverage range of the first layer 24 can exceed the coverage range of the heating portion 21, so that the thickness of the heating prefabricated member 20 at the position of the leading edge 104 is relatively large, and the thickness of the heating prefabricated member extending to the position of the trailing edge 105 gradually decreases.

In the blade 100 provided by the embodiment of the present application, by differentiating the coverage range of the additional three-layer structure of the heating prefabricated member 20, the thickness of the heating prefabricated member 20 from the leading edge 104 to the trailing edge 105 tends to decrease. Thus, the heating prefabricated member 20 may have a better connection performance and protection performance, and conform to the outer contour of the housing 103, so as to form a more stable fitting connection.

As an alternative embodiment, the heating prefabricated member 20 has the same extending direction as the surface contour of the housing 103.

In the blade 100 provided by the embodiment of the present application, by fitting connection between the heating prefabricated member 20 and the housing 103, the heating prefabricated member 20 can conform to the outer surface of the housing 103 and have the same contour as the housing 103, thereby obtaining the more stable connection and providing the better connection stability.

As an alternative embodiment, the side of the first protective portion 23 away from the housing 103 is coated with paint.

In the blade 100 provided by the embodiment of the present application, by coating the housing 103 with paint after bonding the heating prefabricated member 20 to the housing 103, the protection for the housing 103 can be achieved, and the surface of the housing 103 can be smoother, thereby facilitating the flow of air over the surface of the housing 103 and creating a more stable airflow driving force.

As an alternative embodiment, referring to Fig. 6, the blade 100 includes a lightning protection prefabricated member 80, which is adhered to the blade tip 102. The lightning protection prefabricated member 80 includes a lightning receptor, which is connected to a down conductor.

Considering that in this embodiment, the blade 100 is deiced by means of electric heating, and the housing 103 is provided with the structures such as the conductive prefabricated portion 30 and the heating prefabricated portion 20, the lightning protection prefabricated member 80 may be provided in this embodiment to divert the lightning in order to prevent the aforementioned components from being interfered with by the lightning during the deicing process.

Alternatively, the lightning protection prefabricated member 80 can also adopt a prefabricated structure, which can be separately formed and then adhered to the housing 103, specifically at the blade tip 102, for better lightning absorption. The prefabricated structure facilitates later assembly and further simplifies the process flow.

Among them, the lightning protection prefabricated member 80 absorbs lightning through the lightning receptor primarily. Alternatively, the lightning receptor can adopt a lightning grid structure to absorb lightning over a larger area. The lightning receptor is connected to the down conductor, so as to discharge the lightning, prevent the conductive prefabricated member 30 and the heating prefabricated member 20 from being interfered with by the lightning on the housing 103, and avoid affecting the heating and deicing effect.

In the blade 100 provided by the embodiment of the present application, by adhering the lightning protection prefabricated portion 80 at the blade tip 102, the lightning protection for the housing 103 can be better, thereby preventing the electric heating process on the housing 103 from being interfered by lightning, providing a better lightning protection during the heating deicing process, obtaining the safety performance, and ensuring the stable and sustainable deicing.

As an alternative embodiment, referring to Fig. 7, the blade 100 includes a plurality of heating prefabricated members 20. The plurality of heating prefabricated members 20 are spaced apart from one another and laid on the housing 103, and the conductive prefabricated member 30 is connected to each of the plurality of heating prefabricated members 20.

Considering the need to deice at different locations on the housing 103, in this embodiment, the plurality of heating prefabricated members 20 can be laid on the housing 103 to perform heating and deicing on the plurality of locations, respectively.

The present application does not impose any specific limitations on the quantity of heating prefabricated members 20, and the quantity can be determined based on different actual deicing requirements.

In the blade 100 provided by the embodiment of the present application, by laying the plurality of heating prefabricated members 20 on the housing 103, the heating and deicing at different positions of the housing 103 can be performed simultaneously, thus the deicing effect can be better.

As an alternative embodiment, the conductive prefabricated member 30 is arranged at the blade root 101, and the heating prefabricated member 20 is laid on a side of the conductive prefabricated member 30 close to the blade tip 102.

Considering that the power supply is typically arranged at the blade root 101, in order to facilitate the connection between the conductive prefabricated member 30 and the power supply, the conductive prefabricated member 30 can be arranged at the blade root 101. However, compared to the blade root 101, the blade tip 102 is more prone to icing. Therefore, the heating prefabricated member 20 can be laid at the blade tip 102. Finally, the conductive prefabricated member 30 and the heating prefabricated member 20 are connected to achieve the deicing process through electric heating.

In the blade 100 provided by the embodiment of the present application, by determining the positional relationship between the conductive prefabricated member 30 and the heating prefabricated member 20, the connection between the conductive prefabricated member 30 and the heating prefabricated member 20 can be achieved more easily, the deicing process can be completed more targetedly, and the deicing effect can be better.

An embodiment of the present application provides a wind turbine generator set, including the blade 100 as described above.

An embodiment of the present application provides a heating prefabricated member of a blade, a conductive prefabricated member, a blade and a wind turbine generator set. By laying the heating prefabricated member on the inner surface or outer surface of the blade's housing, the housing and the heating prefabricated member can be formed as two separate components, thereby simplifying the blade forming process. The formed heating prefabricated member is simply laid directly on the housing for heating. On the basis of using the heat from the heating process to deice the housing, the reliability of the connection between the heating prefabricated member and the housing can be improved, the problem of unstable bonding between the heating prefabricated member and the housing due to complex processes can be solved, and the deicing effect can be better. Additionally, by preforming the heating prefabricated member and then directly laying it on the housing, the difficulty of the process can be reduced, and the manufacturing efficiency can be improved. In addition, it is also conducive to completing the operations at heights, providing a better manufacturing flexibility, reducing the downtime of the generator set, reducing the impact on the power generation of the generator set, and resulting in better economic benefits.

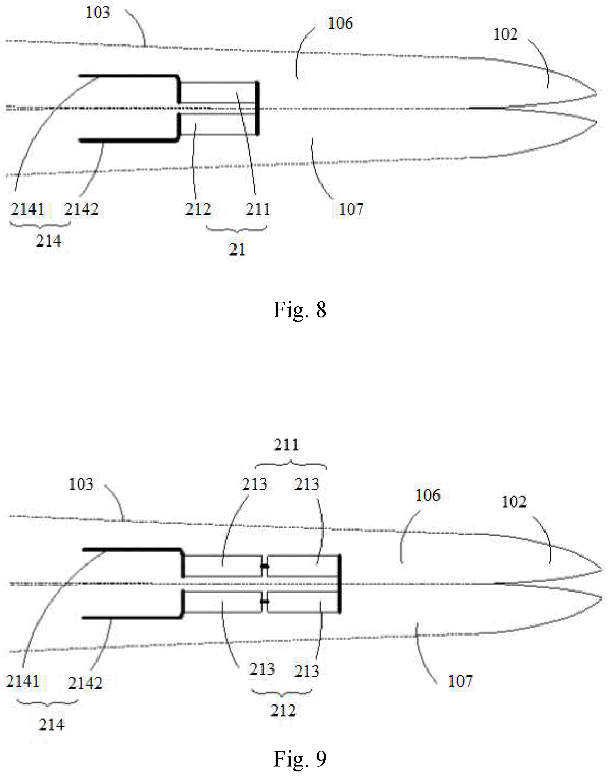

Referring to Figs. 8 to 10, an embodiment of the present application provides a heating portion 21, which is arranged on the housing 103 of the blade. The housing 103 includes a first region 106 and a second region 107. The heating portion 21 includes a first heating section 211 and a second heating section 212 which are spaced apart from each other. The first heating section 211 is arranged in the first region 106 and the second heating section 212 is arranged in the second region 107. The first heating section 211 and the second heating section 212 are connected in series through a conductor. The heating portion 21 is configured to provide heat to the housing 103.

In order to remove the ice on the surface of the housing 103 of the blade, the heating portion 21 provided by this embodiment can supply heat to the housing 103 by utilizing the principle of electric heating, thereby melting the ice and achieving the purpose of deicing.

Optionally, in this embodiment, the first heating section 211 and the second heating section 212 in the heating portion 21 are utilized to deice two regions respectively, thereby achieving simultaneous deicing of different regions of the housing 103.

Optionally, the heating portion 21 can be designed as a prefabricated structure, allowing the heating portion 21 to be laid on the housing 103 after the heating portion being formed independently.

Regarding arranging the heating portion 21 on the housing 103, the heating portion can be arranged on either the inner surface or outer surface of the housing 103. When the heating portion 21 is arranged on the outer surface, the heating portion can directly apply electrical heating to the outer surface, thereby directly supplying heat to the outer surface. When the heating portion 21 is arranged on the inner surface, the heat can be conducted to the outer surface for deicing.

Of course, the heating portion 21 in this embodiment can also be integrated into the housing 103 during the infusion molding process of the blade housing 103, and can be molded integrally with the blade housing 103, so as to achieve simultaneous heating for different regions of the housing 103.

In order to ensure the simultaneous heating of the first region 106 and the second region 107 using the first heating section 211 and the second heating section 212 in the heating portion 21, it is necessary to connect the first heating section with the second heating section in series. Considering that the direct contact between the two heating sections may cause a short circuit, they need to be spaced apart from each other, and the connection in series can be used to achieve the simultaneous electric heating for different regions.

As shown in Figs. 8 and 9, an embodiment of the present application provides a heating portion 21, further including a conductor 214. The conductor 214 includes a first trace 2141 and a second trace 2142. The first trace 2141 is connected to one of the first heating section 211 and the second heating section 212, while the second trace 2142 is connected to the other. Current is input to the heating portion 21 through the first trace 2141 and output through the second trace 2142. Regarding the specific structure of the conductor 214, the conductor has the first trace 2141 and a second trace 2142, which are connected between the heating portion 21 and the power supply. The current flow direction of the first trace 2141 is from the power supply to the heating portion 21, while the second trace 2142 serves as a loop to conduct current back to the power supply. The heating portion 21, the conductor 214 and the power supply together form a closed circuit. Optionally, the power supply can be arranged at the blade root 101 of the blade, so as to facilitate the connection of the wire. Optionally, the conductor 214 is a prefabricated member.

The heating portion 21 provided in the embodiments of the present application can heat the housing 103 of the blade. The heating portion 21 can be divided into the first heating section 211 and the second heating section 212 which are connected in series to heat the first region 106 and the second region 107 of the housing 103, respectively. The first trace 2141 and the second trace 2142 in the conductor 214 are connected to the heating portion 21 to form a current loop, thereby achieving electric heating and deicing in different regions of the housing 103 of the blade simultaneously, increasing the deicing area of the housing 103 of the blade, improving the overall deicing capability, so that the deicing of the blade can be more thorough, the deicing effect can be better. Moreover, the trace is simple and easy to operate, which is conducive to the mounting of the heating portion 21.

As an alternative embodiment, the first region 106 includes a windward region and the second region 107 includes a leeward region, and a thermal power density of the first heating section 211 is greater than a thermal power density of the second heating section 212.

Optionally, the first heating section 211 can be arranged on a windward side of the housing 103, and the second heating section 212 can be arranged on a leeward side of the housing 103, thereby enabling the heating portion 21 to heat and deice the windward side and leeward side simultaneously.

Due to the greater impact of wind force on the windward region compared to the leeward region, icing is more likely to occur in the windward region. Therefore, in this embodiment, by controlling the difference in thermal power density between the first heating section 211 and the second heating section 212, the thermal power density of the first heating section 211 is greater than the thermal power density of the second heating section 212, thereby achieving more effective deicing in the windward region.

Among them, thermal power density refers to the amount of thermal work done per unit area of heating section per unit time. The thermal power density of the first heating section 211 is greater than the thermal power density of the second heating section 212. That is, compared to the leeward region, more heat needs to be provided to the windward region per unit time and per unit area, which can be beneficial for deicing in the windward region.

As an alternative embodiment, the first heating section 211 and the second heating section 212 include resistance wires, the number of resistance wires per unit area in the first heating section 211 is greater than the number of resistance wires per unit area in the second heating section 212.

When it is required that the thermal power density of the first heating section 211 is greater than the thermal power density of the second heating section 212, and the area of the first heating section 211 is equal to the area of the second heating section 212, the thermal power density can be controlled by adjusting the number of resistance wires, and the number of resistance wires in the first heating section 211 can be greater than the number of resistance wires in the second heating section 212 to achieve the requirement.

Optionally, the heating portion 21 includes the resistance wires, and the thermal power per unit area of the resistance wires in the first heating section 211 is greater than the thermal power per unit area of the resistance wires in the second heating section 212.

As an alternative embodiment, referring to Fig. 9, the first heating section 211 and/or the second heating section 212 include a plurality of heating sub-sections 213, which are connected in series through the conductors.

Furthermore, the first heating section 211 and the second heating section 212 are each divided into the plurality of heating sub-sections 213, which are connected in series, so that each of sub-regions within the first region 106 and the second region 107 can be heated targetedly.

In the embodiments of the present application, there is no specific limitation on the number of heating sub-sections 213 formed by dividing the first heating section 211 and the second heating section 212, as long as it can ensure that the heating sub-sections 213 are connected in series to provide heat to the sub-regions, respectively.

Meanwhile, in the embodiments of the present application, the specific arrangement of the plurality of heating sub-sections 213 formed by division is not particularly limited. The plurality of formed heating sub-sections 213 may be arranged at corresponding deicing positions according to different actual deicing requirements to realize heating and deicing the plurality of sub-regions.

Optionally, the thermal power density of the heating sub-sections 213 can be designed according to the deicing requirements of different regions of the blade.

By dividing the heating section into the plurality of heating sub-sections 213, the heating portion 21 provided by the embodiment of the present application supplies heat to the plurality of sub-regions within the first region 106 and the second region 107, so as to realize more targeted deicing at different ice accumulation positions. Due to the trend of larger-sized generator set, the blade is becoming increasingly longer. By dividing the heating section with a relative large area into the heating sub-sections 213 with relative small areas for manufacturing, it can facilitate the forming process and completing the manufacturing process.

As an alternative embodiment, the plurality of heating sub-sections 213 are spaced apart from one another in the length direction of the blade. In the direction from the blade root 101 towards the blade tip 102, the thermal power density of the plurality of heating sub-sections 213 gradually increases.

The plurality of heating sub-sections 213 that have formed can be arranged along the length direction of the blade. The overall heating sub-sections 213 are arranged along the direction from the blade root 101 to the blade tip 102, and are connected in series through the conductors.

Taking into account the actual airflow pattern during the rotation of the blade, the blade tip 102 is more significantly affected by wind forces compared to the blade root 101, and is more prone to icing. By arranging the heating sub-sections 213 with varying thermal power densities in the length of the blade, it is more conducive to targeted deicing.

Specifically, the heating sub-sections 213 close to the blade tip 102 has a higher thermal power density compared to the heating sub-sections 213 close to the blade root 101. The overall arrangement is that, in the direction from the blade root 101 towards the blade tip 102, the thermal power density of the plurality of heating sub-sections 213 gradually increases, which can show a gradual trend, and better adapt the actual icing environment on the blade.

In this way, compared to the side close to the blade root 101, the heating sub-sections 213 close to the blade tip 102 can provide more heat to the housing 103 per unit time, thereby adapting to the actual working conditions where ice formation is more likely to occur at the blade tip 102, and achieving a better deicing effect on the blade tip 102.

Optionally, when the heating section adopt a prefabricated structure, each of the heating sub-sections 213 can also be the prefabricated structure and adhered onto the surface of the housing 103. In order to reflect the difference in thermal power density of each of the heating sub-sections 213, the difference can be achieved by adjusting the number of resistance wires per unit area and/or the thermal power of resistance wires per unit area in each of the heating sub-sections 213. That is, the number of resistance wires per unit area and/or the thermal power of resistance wires per unit area in the sub-sections 213 on the side close to the blade tip 102 is greater than that in the heating sub-sections 213 on the side close to the blade root 101.

In the heating portion 21 provided in the embodiment of the present application, by arranging the plurality of heating sections 213 in the length direction of the blade, the sufficient deicing can be carried out at this position. At the same time, by controlling and adjusting the difference in thermal power density of each of the heating sub-sections 213 in this direction, more heat can be provided to the position of the blade tip 102 compared to the position of the root 101, thereby adapting to the actual icing law on the blade and providing more targeted deicing for the positions of the blade tip 102 and blade root 101.

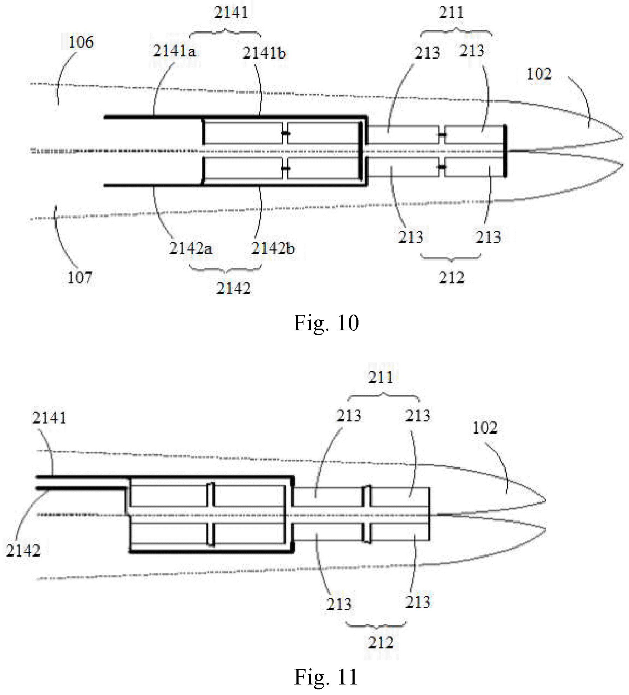

This embodiment also provides a deicing device. Referring to Fig. 10, the deicing device includes a plurality of heating portions 21, which are connected in parallel.

Optionally, in this embodiment, the plurality of heating portions 21 are provided in the deicing device, and the plurality of heating portions 21 are connected in parallel, thereby further increasing the deicing area and achieving simultaneous deicing in multiple regions on the surface of the housing 103.

In this embodiment, there is no specific limitation on the number of heating portions 21, and the heating portions can be arranged to cover according to the actual deicing area requirement. There is no specific limitation on the relative positional relationship between the heating portions 21, and the heating portions can be arranged according to the actual deicing location requirement, as long as they are connected in parallel and provide the electric heating.

In the deicing device of the blade provided by the embodiments of the present application, by arranging the plurality of heating portions 21 connected in parallel in the deicing device, the coverage range of the heating portions 21 can increase, the deicing area of the deicing device can be improved, the simultaneous heating and deicing in multiple different regions can be achieved, the deicing for the required regions can be more targeted, and the overall deicing effect can be improved.

As an alternative embodiment, referring to Fig. 10, the first trace 2141 includes a first main trace 2141a and a plurality of first branch traces 2141b, and the second trace 2142 includes a second main trace 2142a and a plurality of second branch traces 2142b. One end of any one heating portion 21 is connected to one of the first branch traces 2141b, and the other end is connected to one of the second branch traces 2142b. The plurality of first branch traces 2141b converge to the first main trace 2141a, and the plurality of second branch traces 2142b converge to the second main trace 2142a.

In a structure with the plurality of heating portions 21 connected in parallel, regarding the specific structure of the electrical conductor 214, the first trace 2141 is divided into the first main trace 2141a and the plurality of first branch traces 2141b, and the second trace 2142 is divided into the second main trace 2142a and the plurality of second branch traces 2142b.

Any one of the first branch traces 2141b is connected to one end of the heating portion 21, so that the first branch trace2141b can supply the current to the heating portion 21. One of the second branch traces 2142b is connected to the other end of the heating portion 21, so that the second branch traces 2142b can output the current. In this way, the plurality of first branch traces 2141b can converge and connect to the first main trace 2141a, and the plurality of second branch traces 2142b can converge and connect to the second main trace 2142a. The first main trace 2141a supplies the current to the plurality of first branch traces 2141b, and the current forms shunts at the plurality of first branch traces 2141b, corresponding to the heating portions 21, respectively. At the same time, the shunts of the current flowing out of the plurality of heating portions 21 correspondingly flow through the second branch traces 2142b and converge into the second main trace 2142a for transmission.

In the deicing device of blade provided by the embodiments of the present application, by dividing the trace into the main trace and the branch traces that are connected, the parallel connection of the plurality of heating portions 21 can be achieved, thereby facilitating the transmission of the parallel circuit and ensuring the further increase in the coverage area of the heating portions 21.

As an alternative embodiment, the plurality of heating portions 21 are spaced apart from one another in the length direction of the blade. In the direction from the blade root 101 towards the blade tip 102, the thermal power density of the plurality of heating portions 21 gradually increases.

Optionally, the plurality of heating portions 21 are connected in parallel, and arranged in the length direction of the blade. As mentioned above, the blade tip 102 and blade root 101 have different icing conditions, thus the differentiated design of the thermal power density of the heating portions 21 is required based on the parallel structure.

Based on the above analysis, it can be seen that the thermal power density of the heating portion 21 at the blade tip 102 needs to be greater than the thermal power density of the heating portion 21 at the blade root 101. Therefore, in the parallel structure, the thermal power density of the heating portion 21 exhibits an increasing trend in the direction from the blade root 101 towards the blade tip 102.

Optionally, the heating portion 21 serves as the heating portion for the heating prefabricated member 20 as described above. When the heating portion 21 is used as the heating portion for the heating prefabricated member 20 as described above, optionally, the electrical conductor 214 is electrically connected to the conductive prefabricated member 30.

Alternatively, when the heating portion 21 is used as the heating portion for the heating prefabricated member 20 as described above, the thermal power density can also be adjusted by controlling the number of resistance wires in the heating portion. The relative large number of resistance wires can be arranged in the heating portion 21 close to the blade tip 102, thereby reflecting the structural difference.

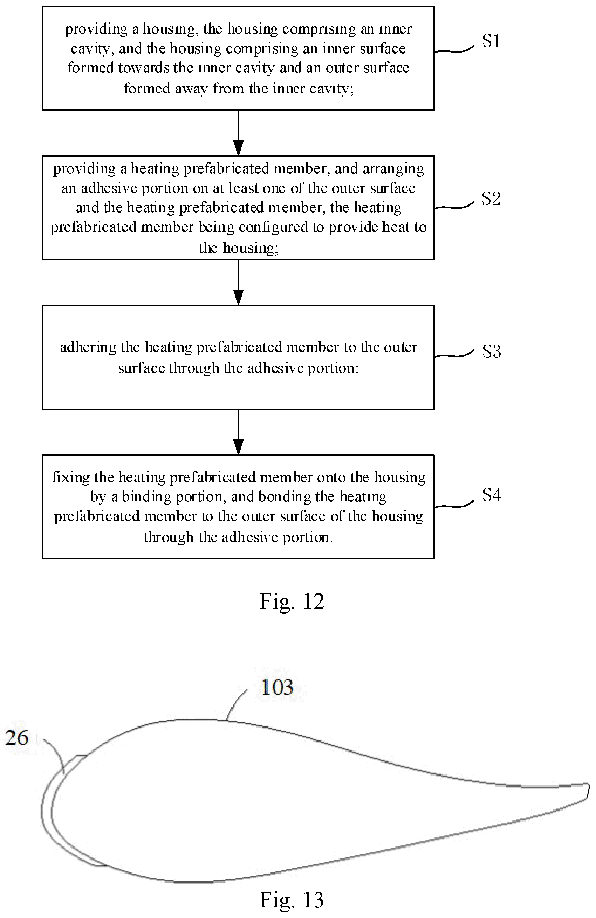

Referring to Fig. 12, a mounting method for a heating prefabricated member of a blade is provided by the embodiment of the present application. Optionally, the heating prefabricated member of the blade may be the heating prefabricated member 20 mentioned in the aforementioned embodiments. The method includes:

S1. providing a housing 103, the housing 103 including an internal cavity, and the housing 103 including an inner surface formed towards the internal cavity and an outer surface formed away from the internal cavity;

S2. providing the heating prefabricated member 20, and arranging an adhesive portion 26 on at least one of the outer surface and the heating prefabricated member 20, the heating prefabricated member 20 being configured to provide heat to the housing 103;

S3. adhering the heating prefabricated member 20 to the outer surface through the adhesive portion 26;

S4. fixing the heating prefabricated member 20 onto the housing 103 by a binding portion 40, and bonding the heating prefabricated member 20 to the outer surface of the housing 103 through the adhesive portion 26.

In step S1, the housing 103 is typically molded using a mold through a resin infusion process in advance, and an initial housing 103 can be obtained after an upper mold and a lower mold are closed.

Optionally, the housing 103 itself has an internal cavity, in which structures such as web plate can be typically arranged to support the housing 103. After closing the mold, the housing 103 has an inner surface and outer surface that are opposite to each other. The present application is directed to a mounting method for adhering the heating prefabricated member 20 to the outer surface, thereby utilizing the heating performance of the heating prefabricated member 20 to provide heat to the housing 103, and ultimately achieving the object of deicing the surface of the housing 103.

Optionally, the heating prefabricated member 20 that is adhered in this embodiment is a prefabricated structure, which means that the heating prefabricated member 20 and the housing 103 are two separate components. After separately forming the heating prefabricated member and the housing, the heating prefabricated member 20 can be adhered to the outer surface of the housing 103 to form an integrated blade structure.

In step S2, the adhesive portion 26 can be provided between the housing 103 and the heating prefabricated member 20. Specifically, the adhesive portion 26 can be provided on the outer surface of the housing 103, or on the surface of the heating prefabricated member 20, or on both the housing 103 and the heating prefabricated member 20. The object is to use the adhesive portion 26 to bond the heating prefabricated member 20 and the housing 103 together. Referring to Fig. 13, in this embodiment, the adhesive portion 26 is provided on the housing 103. Optionally, the adhesive portion 26 can be made of structural adhesive or other materials, and the adhesive portion 26 can be applied to the outer surface of the housing 103, specifically to a position of the heating prefabricated member 20 to be bonded.

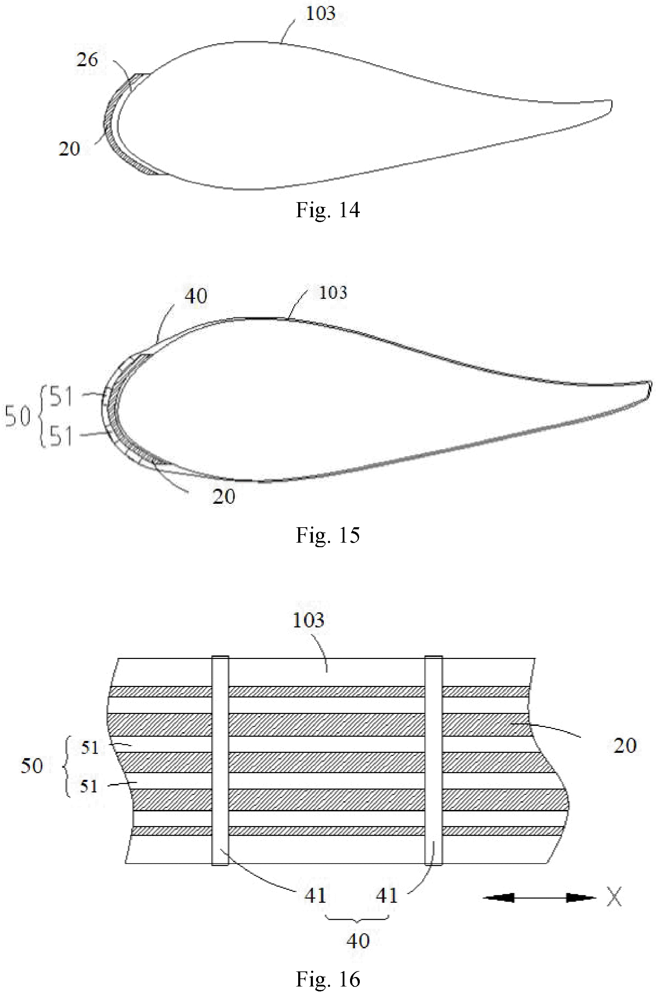

Subsequently, in step S3, referring to Fig. 14, the heating prefabricated member 20 can be adhered to the outer surface through the adhesive portion 26, thereby establishing a preliminary connection between the heating prefabricated member 20 and the housing 103.

Optionally, according to different actual needs, the plurality of heating prefabricated members 20 can be adhered to the outer surface, thereby covering a larger area of the outer surface and achieving the large-area heating deicing. The specific number and area need to be determined based on the actual deicing requirement.

In order to further adhere and fix the heating prefabricated member 20 onto the housing 103 to form a stable connection between the heating prefabricated member and the housing, in step S4, the preliminarily adhered heating prefabricated member 20 can be further fixed onto the housing 103 using the binding portion 40, so that a tighter connection between the heating prefabricated member 20 and the housing 103 can be formed, and the adhesion between the two components can be more sufficient. Referring to Figs. 15 and 16, optionally, the binding portion 40 can adopt a band-like structure or a strip-like structure, as long as the binding portion can bind the heating prefabricated member 20 onto the housing 103.

Optionally, after confirming that a sufficient bond between the heating prefabricated member 20 and the housing 103 has been formed, the binding portion 40 can be removed at last, thereby separating the binding portion from the housing 103 to obtain the final blade structure.

In the mounting method of the heating prefabricated member of the blade provided by the embodiments of the present application, by adhering the heating prefabricated member 20 to the outer surface through the adhesive portion 26, and fixing the heating prefabricated member 20 onto the housing 103 by the binding portion 40, the heating prefabricated member 20 can be bonded to the outer surface of the housing 103, so as to achieve heating the housing 103 of the blade be means of electric heating, and achieving the object of deicing the surface of the housing 103. The mounting method is simple in steps, the process flows are simplified to reduce the difficulty, which can be conducive to forming the blade, convenient for operation by working personnel, and realize the more efficient deicing performance of the blade itself. At the same time, the tools used in the method are simple, which can reduce the cost of manufacturing process and achieve the better economic benefits. The mounting method can be performed on the wind turbine generator set without dismantling the blade, and once the heating deicing device laid by this mounting method is damaged by lightning strikes, the heating prefabricated member 20 can be repaired and replaced.

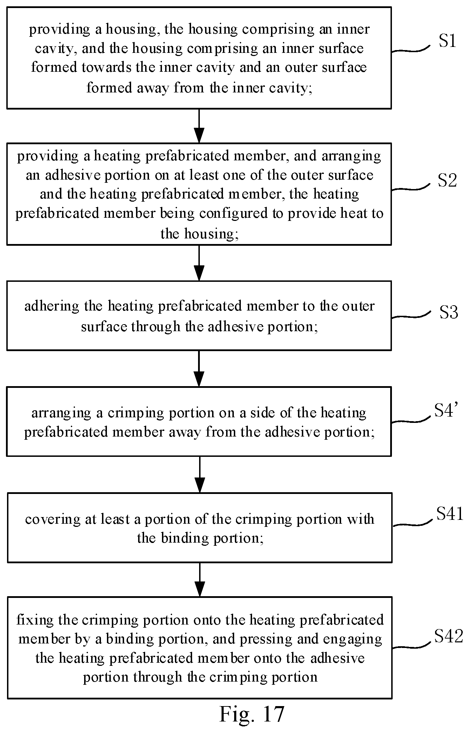

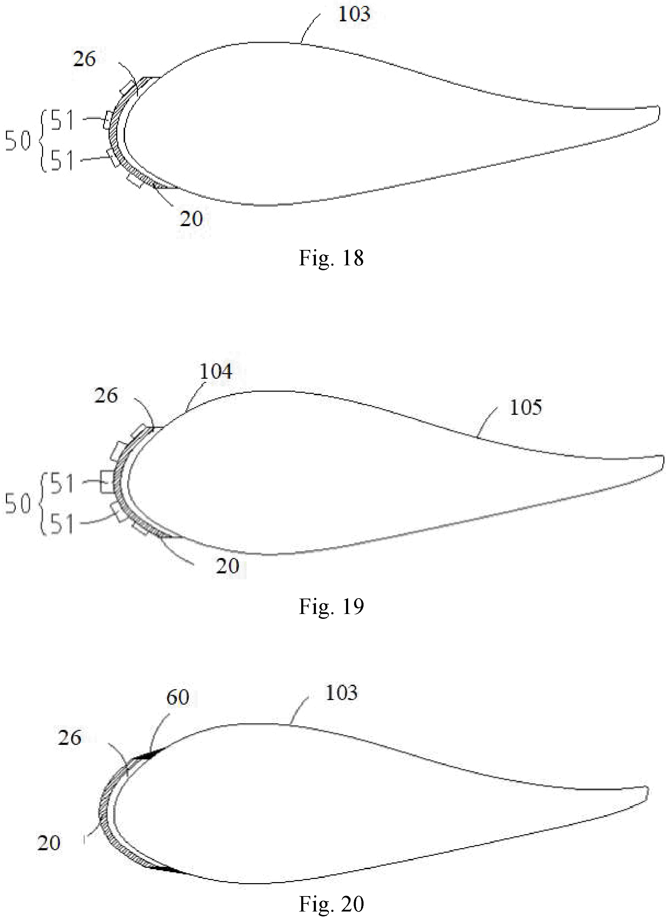

As an alternative embodiment, referring to Fig. 17 combined with Figs. 16 and 18, before the step of fixing the heating prefabricated member 20 onto the housing 103 by the binding portion 40, and bonding the heating prefabricated member 20 to the outer surface of the housing 103 through the adhesive portion 26, the mounting method further includes:

S4'. arranging a crimping portion 50 on a side of the heating prefabricated member 20 away from the adhesive portion 26.

Optionally, the crimping portion 50 can be of various different structural forms. The main function of the crimping portion is to form a certain degree of pressing on the heating prefabricated member 20, so that the heating prefabricated member 20 can be further adhered to the housing 103 through the adhesive portion 26.

Therefore, after adhering the heating prefabricated member 20 to the housing 103 through the adhesive portion 26, the crimping portion 50 can also be adhered to the heating prefabricated member 20 through by means of adhering to prepare for the next step of crimping the heating prefabricated member 20.

In the mounting method of the heating prefabricated member of the blade provided by the embodiment of the present application, by providing the crimping portion 50 on the heating prefabricated member 20, the crimping performance of the crimping portion 50 can be utilized to further crimp the heating prefabricated member 20, so that the heating prefabricated member can be more fully adhered to the outer surface of the housing 103.

As an alternative embodiment, referring to Fig. 17 combined with Figs. 16, 18 and 19, the step of fixing the heating prefabricated member 20 onto the housing 103 by a binding portion 40, and bonding the heating prefabricated member 20 to the outer surface of the housing 103 through the adhesive portion 26 includes:
S41. covering at least a portion of the crimping portion 50 with the binding portion 40;
S42. fixing the crimping portion 50 onto the heating prefabricated member 20 by the binding portion 40, and pressing and engaging the heating prefabricated member 20 onto the adhesive portion 26 through the crimping portion 50.

In steps S41 and S42, after arranging the crimping portion 50 on the heating prefabricated member 20, at least portion of the crimping portion 50 is bound by the binding portion 40, so that the tightening force formed on the binding portion 40 can be transmitted to the heating prefabricated member 20 through the crimping portion 50. The crimping portion 50 indirectly forms a crimping force on the heating prefabricated member 20, and presses the heating prefabricated member onto the adhesive portion 26 to adhere to the housing 103.

An embodiment of the present application provides the mounting method of the heating prefabricated member of the blade. By fixing the crimping portion 50 onto the heating prefabricated member 20 through the binding portion 40, the crimping portion 50 indirectly applies a squeezing force to the heating prefabricated member 20, so that the heating prefabricated member 20 can be adhered to the housing 103 more thoroughly to form a more stable adhesion.

As an alternative embodiment, the step of arranging the crimping portion 50 on the side of the heating prefabricated member 20 away from the adhesive portion 26 includes:

providing the crimping portion 50, in which the crimping portion 50 includes a curved panel and a plurality of crimping teeth arranged on the curved panel; the shape of the curved panel matches with the shape of the surface of the heating prefabricated member 20 away from the adhesive portion 26; the plurality of crimping teeth extend in a length direction X of the curved panel, and two adjacent crimping teeth are at least partially spaced apart from each other in an extending direction off the curved surface of the curved panel; and

covering the heating prefabricated member 20 with the curved panel of the crimping portion 50, and adhering and connecting the curved panel to the heating prefabricated member 20.

In this embodiment, a structural form of the crimping portion 50 is provided. The crimping portion 50 is designed as a curved panel structure. An extending direction of the curved panel structure matches with a curved surface of the housing 103 where the heating prefabricated member 20 is located, so that the curved panel structure of the crimping portion 50 can be adhered to the housing 103 where the heating prefabricated member 20 is located.

The curved panel of the crimping section 50 is provided with the plurality of crimping teeth, which are in form of a strip-like structure on the curved panel. The crimping teeth are spaced apart from each other and each of them extends in the length direction X, thereby covering the housing 103 in the length direction X and providing a larger contact area with the preliminarily bonded heating prefabricated member 20.

When the binding portion 40 is used to bind the crimping portion 50, the binding portion 40 comes into contact with the plurality of crimping teeth on the curved panel, thereby transmitting the tightening force through the crimping teeth to adhere the heating prefabricated member 20 to the housing 103.

An embodiment of the present application provides the mounting method of the heating prefabricated member of the blade. The mounting method provides the structural form of the crimping portion 50, a better adhesion between the curved panel and the heating prefabricated member 20 can be obtained through the curved panel, and crimping the heating prefabricated member 20 through crimping teeth can be obtained, so that the heating prefabricated member 20 can be adhered to the housing 103 more tightly.

As an optional embodiment, referring to Figs. 15 to 17, the step of arranging the crimping portion 50 on the side of the heating prefabricated member 20 away from the adhesive portion 26 includes:
providing the crimping portion 50, including a plurality of support bars 51; and
adhering each of the plurality of support bars 51 to the heating prefabricated member 20 in the length direction X of the housing 103, and each adjacent two of the plurality of plurality of support bars 51 being spaced apart from each other in an extending direction of a curved surface of the housing 103.

Optionally, the crimping portion 50 can be designed in the form of the plurality of support bars 51. When the support bars 51 are adhered to the heating prefabricated portion 20, each of the support bars 51 is adhered in the length direction X of the housing 103, and the adjacent support bars 51 are spaced apart from each other in the extending direction of the curved surface of the housing 103. The support bars 51 can adopt a timber structure.

Optionally, the number and distribution of support bars 51 can be determined based on the actual coverage area of the heating prefabricated member 20, and the number of support bars 51 is not specifically limited in the present application.

When the support bars 51 are bound by the binding portion 40, the binding portion 40 directly contacts a side of the support bars 51 away from the heating prefabricated portion 20. After gradually tightening, the binding portion 40 provides the tightening force to the plurality of support bars 51, and forms the squeezing force on the heating prefabricated portion 20 through the support bars 51, so that the heating prefabricated portion can be tightly adhered to the adhesive portion 26.

An embodiment of the present application provides the mounting method for the heating prefabricated member of the blade. The mounting method provides another structural form of the crimping portion 50. By utilizing the structure of the plurality of support bars 51, it can uniformly contact the binding portion 40, so that the squeezing force on the heating prefabricated member 20 can be more uniform and the crimping effect can be better.

As an optional embodiment, as shown in Fig. 18, each of the support bars 51 includes a frustum structure, and the cross-section of the support bar 51 in a thickness direction of the housing 103 is trapezoidal.

Considering that when the support bars 51 are bound by the binding portion 40, the binding portion 40 may directly contact the support bar 51. In order to protect the binding portion 40 and prevent the binding portion 40 from breaking caused by the stress concentration at the contact point between the binding portion 40 and the support bar 51, the cross-section of the support bar 51 is designed to be trapezoidal in this embodiment, so that the contact position between the binding portion 40 and the support bar 51 can be a flat interface, and the stress in this portion can be reduced.

In the mounting method of the heating prefabricated member of the blade provided by this embodiment of the application, the support bar 51 is designed as the frustum structure, and a contact point between the binding portion 40 and the support bar 51 is the flat interface. During the tightening process of the binding portion 40, the breakage of the binding portion 40 caused by excessive stress at the local contact point can be avoided, and the safety protection for the binding portion 40 can be better.

As an optional embodiment, referring to Fig. 19, in a direction from the leading edge 104 towards the trailing edge 105 of the housing 103, the distance from one end of each of the plurality of support bars 51 away from the housing 103 to the housing 103 shows the decreasing trend. The step of fixing the crimping portion 50 onto the heating prefabricated member 20 by the binding portion 40 includes: utilizing the binding portion 40 to sequentially contact each of the support strips 51 in the direction from the leading edge 104 to the trailing edge 105 and crimp to the heating prefabricated member 20.

Optionally, the heating prefabricated member 20 is generally adhered to the leading edge 104 of the housing 103. As the plurality of support bars 51 need to be adhered to the heating prefabricated member 20, the support bars 51 at the leading edge 104 protrudes from the housing 103. When using the binding portion 40 for binding, the support bar 51 closest to the leading edge 104 may come into contact with the support bar 51 at the location of the leading edge.

In this embodiment, the thickness dimensions of the plurality of support bars 51 are differentiated, that is, in the direction from the leading edge 104 towards the trailing edge 105, the thickness of the support bars 51 gradually decreases, so that the support bars 51 at position of the leading edge 104 can contact the binding portion 40 firstly when are bound. The binding portion 40 may squeeze the support bars 51 at the leading edge 104 first, then gradually bind them towards position of the trailing edge 105, and sequentially contact and bind the support bars 51 close to the position of the trailing edge 105.

That is to say, during the binding process, the binding portion 40 squeezes the heating prefabricated member 20 from the leading edge 104 first, and then gradually squeezes towards the heating prefabricated member 20 at the trailing edge 105. There is a sequence of compression. Finally the heating prefabricated member 20 as a whole is pressed and engaged onto the housing 103.

In the mounting method of the heating prefabricated member of the blade provided by the present embodiment, by utilizing the differentiated design of the thickness of the plurality of support bars 51, during the binding process, the support bars 51 are contacted and squeezed from the position of the leading edge 104 towards the position of the trailing edge 105 sequentially during the binding process, so that the compression of the heating prefabricated member 20 can be more uniform, and the force distributed at all locations can be more uniform.

As an optional embodiment, referring to Fig. 15, the step of fixing the heating prefabricated member 20 onto the housing 103 by a binding portion 40 includes:
wrapping the binding portion 40 around the housing 103 in a chordwise direction of the housing 103 for one full turn, and covering at least portion of the heating prefabricated member 20 with the binding portion 40; and
tightening the binding portion 40, and adhering the heating prefabricated member 20 to the housing 103 through the adhesive portion 26.

Optionally, in order to fully bind the heating prefabricated member 20 through the binding portion 40, the binding portion 40 can be wrapped around the housing 103 in the chordwise direction of the housing 103 for one full turn, thereby binding the heating prefabricated member 20 to the housing 103.

After binding through the binding portion 40, the binding portion 40 can be tightened to form the squeezing force on the heating prefabricated portion 20, thereby ensuring that the heating prefabricated portion 20 can be fully adhered to the adhesive portion 26. After tightening the binding portion 40, the entire structure is allowed to stand for a period of time, and the bonding between the heating prefabricated portion 20 and the adhesive portion 26 can be more firm.

In the mounting method of the heating prefabricated member of the blade provided by this embodiment of the application, by wrapping the binding portion 40 around the housing 103 for one full turn and tightening the binding portion 40, a tighter adhesion to the heating prefabricated member 20 can be obtained and the stability of the adhesion between the heating prefabricated member 20 and the housing 103 can be improved.

As an optional embodiment, referring to Fig. 16, the step of wrapping the binding portion 40 around the housing 103 in a chordwise direction of the housing 103 for one full turn includes:
providing the binding section 40, including a plurality of binding strips 41; and
wrapping the plurality of binding strips 41 around the housing 103 in the chordwise direction in sequence, adjacent binding strips 41 being spaced apart from each other in the length direction X of the housing 103.

Optionally, the binding portion 40 can adopt a structural form of the plurality of binding strips 41. When using the binding portion 40 for binding, the binding strips 41 are sequentially wrapped around the housing 103 in the length direction X, and the adjacent binding strips 41 are spaced apart from each other in the length direction X.

In this embodiment, the number of binding strips 41 can be determined based on the coverage range of the heating prefabricated member 20 on the housing 103. Besides, the uniformity of the distance between the binding strips 41 should also be considered to ensure that the heating prefabricated member 20 can be uniformly stressed and bound at all locations.

Optionally, mainly considering the coverage length of the heating prefabricated member 20 on the housing 103, generally the distance between adjacent binding strips 41 in the length direction X may be 30cm. It is necessary to involve all binding strips 41 in the heating prefabricated member 20 as a whole. At the same time, in order to obtain the binding with force at all sections of the heating prefabricated member 20 and ensure uniform force distribution at all sections, the equidistant distance between the adjacent binding strips 41 should be ensured to evenly distribute the force at all sections, thereby forming a stable adhesion between the entire heating prefabricated member 20 and the housing 103.

In the mounting method of the heating prefabricated member of the blade provided by this embodiment of the application, by wrapping the plurality of binding strips 41 around the housing 103 to bind the heating prefabricated member 20, the entire heating prefabricated member 20 can be fully covered, thereby ensuring that the heating prefabricated member can be uniformly stressed and tightly adhered to the housing 103, preventing local detachment caused by the unstable adhesion, reducing the risk of heating and deicing failure, and obtaining a better reliability.

As an optional embodiment, the step of tightening the binding portion 40, and adhering the heating prefabricated member 20 to the housing 103 through the adhesive portion 26 includes: each of the binding strips 41 is contracted towards the housing 103 by its own tightener to bind the heating prefabricated member 20 to the housing 103 to be bonded tightly.

The mounting method of the heating prefabricated member of the blade provided by the present embodiment provides a method to tighten the binding portion 40. By using the tightener carried on each of the binding strips 41, each of the binding strips 41 can be contracted towards the housing 103, thereby providing the compression force for the heating prefabricated member 20 and achieving the better tightening effect.

As an optional embodiment, the heating prefabricated member 20 can be fixed to the housing 103 through the binding portion 40, so that after the step of bonding the heating prefabricated member 20 to the adhesive portion 26, the mounting method further includes heating and curing the adhesive portion 26.

After tightly bonding the heating prefabricated member 20 to the housing 103, it is necessary to cure the adhesive portion 26, so that the overall structure can be made of a hard material and obtain the better structural stability. Generally, the heating curing can be used to accelerate the curing speed of the adhesive portion 26.

The curing method of the adhesive portion 26 is not particularly limited in the present application, and the adhesive portion can be cured by standing still. After the adhesive portion 26 is cured, the heating prefabricated member 20 has been fixed to the housing 103, and the binding portion 40 can be removed to complete the bonding process of the heating prefabricated member 20.

In the mounting method of the heating prefabricated member of the blade provided by this embodiment of the application, by heating and curing the adhesive portion 26, a more stable connection between the heating prefabricated member 20 and the housing 103 can be formed, the detachment of the heating prefabricated member 20 can be prevented, and the structural strength can be improved.

As an optional embodiment, the step of heating and curing the adhesive portion 26 includes:
arranging an electric-heating blanket on the outer surface of the housing 103, and the electric-heating blanket covering the adhesive portion 26 on the outer surface; and
supplying electricity to the electric-heating blanket to maintain a temperature of the electric-heating blanket above a first threshold and continuously heat the adhesive portion 26 for a first predetermined time period.

Optionally, the first threshold includes 70 °C, and the first predetermined time period includes 5 hours. The first threshold and the first predetermined time period depend on the material of the adhesive portion 26, and different temperature values and heating times are applied to the adhesive portions 26 which are made of different materials. The specific values of the first threshold and the first predetermined time period are not specifically limited in the present application.

The mounting method of the heating prefabricated member of the blade provided by the present embodiment provides a method to heat and cure the adhesive portion 26. By heating and curing the adhesive portion 26, the more stable connection between the heating prefabricated member 20 and the housing 103 can be formed, the detachment of the heating prefabricated member 20 can be prevented, and the structural strength can be improved.

As an optional embodiment, before the step of providing the heating prefabricated member 20, and arranging the adhesive portion 26 on at least one of the outer surface and the heating prefabricated member 20, the mounting method further includes: grinding the outer surface.

Considering that before arranging the adhesive portion 26 on the outer surface of the housing 103, in order to better adhere the adhesive portion 26 to the outer surface, the outer surface can be grinded to provide a clean and flat surface to the adhesive portion 26, so that a better adhesion between the adhesive portion and the housing 103 can be formed.

In the mounting method of the heating prefabricated member of the blade provided by this embodiment of the application, by grinding the outer surface of the housing 103 to form the more stable adhesion between the adhesive portion 26 and the housing 103, the adhesive ability of the adhesive portion 26 can be improved, and the reliability of the adhesion between the heating prefabricated member 20 and the housing 103 can be enhanced.

As an optional embodiment, the step of providing the heating prefabricated member 20, and arranging the adhesive portion 26 on at least one of the outer surface and the heating prefabricated member 20 includes:
applying the adhesive portion 26 on the outer surface; and
grinding the adhesive portion 26, so that a surface of the adhesive portion 26 away from the housing 103 can be formed as a flat surface, and the adhesive portion reaches a first predetermined thickness;
or, applying the adhesive portion 26 to the outer surface of the heating prefabricated member 20;
grinding the adhesive portion 26 so that a surface of the adhesive portion 26 close to the housing 103 can be formed as a flat surface, and the adhesive portion 26 reaches a first predetermined thickness;
or, arranging a first adhesive portion on the outer surface of the heating prefabricated member 20, and arranging a second adhesive portion on the outer surface of the housing 103; and
grinding and flattening a surface of the first adhesive portion away from the heating prefabricated member 20, and grinding and flattening a surface of the second adhesive portion away from the heating prefabricated member 20, so that the surfaces of the first adhesive portion and second adhesive portion in contact with each other form two flat surface.; in which the first adhesive portion and the second adhesive portion form the adhesive portion 26, and the adhesive portion 26 reaches a first predetermined thickness.

Optionally, after arranging the adhesive portion 26 on the outer surface of the housing 103, a tool can be used to grind the surface of the adhesive portion 26 to be flat, so that the adhesive portion have a more flat surface, and the heating prefabricated member 20 is easier to be adhered to the adhesive portion.

Optionally, the first predetermined thickness ranges from 2mm to 5mm, and the thickness of the adhesive portion 26 can be controlled within the range, so as to ensure the adhesion between the heating prefabricated member 20 and the adhesive portion, prevent unnecessary losses caused by the excessive adhesive portion 26, and meet the basic bonding conditions of the heating prefabricated member 20.

In the mounting method of the heating prefabricated member of the blade provided by this embodiment of the application, by adjusting the structure of the adhesive portion 26, the adhesion between the adhesive portion and the heating prefabricated member 20 can be better, and the reliability of the adhesion between the adhesive portion and the heating prefabricated member 20 can be improved.

As an optional embodiment, referring to Fig. 20, in the mounting method includes arranging a linking portion 60 between an edge of the heating prefabricated member 20 and the housing 103 to ensure a seamless adhesion between the heating prefabricated member 20 and the housing 103.

Optionally, the linking portion 60 may adopt the putty, which is mainly used to connect the linking portion 60 between the heating prefabricated portion 20 and the housing 103 after the heating prefabricated portion 20 is adhered to the housing 103. The main function of the linking portion is to perform a transitional shaping on corners of the heating prefabricated portion 20, so as to form a better connection between the heating prefabricated portion 20 and the housing 103.

In the mounting method of the heating prefabricated member of the blade provided by the embodiments of the present application, by arranging the linking portion 60 at the edge of the heating prefabricated member 20, a better connection between the heating prefabricated member and the housing 103 can be formed. On the basis of ensuring the structural stability, the appearance of the overall structure can be improved.

The embodiments of the present application provide the mounting method of the heating prefabricated member of the blade, the blade and the wind turbine generator set. By adhering the heating prefabricated member to the outer surface through the adhesive portion, and fixing the heating prefabricated member onto the housing by the binding portion, the heating prefabricated member can be bonded to the outer surface of the housing, so as to achieve heating the housing of the blade be means of electric heating, and achieving the object of deicing the surface of the housing. The mounting method is simple in steps, the process flows are simplified to reduce the difficulty, which can be conducive to forming the blade, convenient for operation by working personnel, and realize the more efficient deicing performance of the blade itself. At the same time, the tools used in the method are simple, which can reduce the cost of manufacturing process and achieve the better economic benefits.

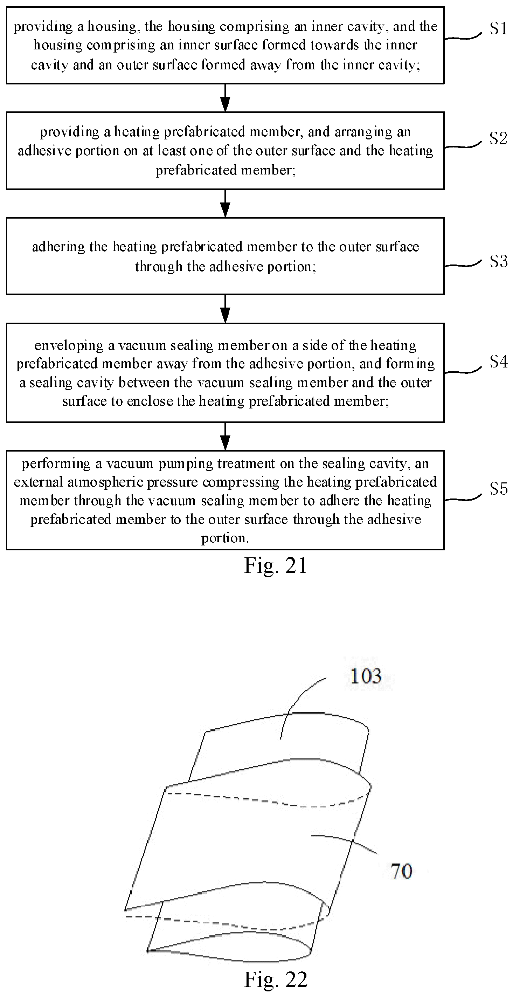

Referring to Fig. 21, an embodiment of the present application provides a mounting method of a heating prefabricated member. Optionally, a heating prefabricated member of the blade is the heating prefabricated member 20 in the above embodiments. The method includes:
S1. providing a housing 103, the housing 103 including an internal cavity, and the housing 103 including an inner surface formed towards the internal cavity and an outer surface formed away from the internal cavity;
S2. providing the heating prefabricated member 20, and arranging an adhesive portion 26 on at least one of the outer surface and the heating prefabricated member 20;
S3. adhering the heating prefabricated member 20 and the outer surface together through the adhesive portion 26;
S4. enveloping a vacuum sealing member 70 on a side of the heating prefabricated member 20 away from the adhesive portion 26, and forming a sealing cavity between the vacuum sealing member 70 and the outer surface to enclose the heating prefabricated member 20; and
S5. performing a vacuum pumping treatment on the sealing cavity, an external atmospheric pressure compressing the heating prefabricated member 20 through the vacuum sealing member 70 to adhere the heating prefabricated member 20 to the outer surface through the adhesive portion 26.

In step S1, the housing 103 is typically molded using a mold through a resin infusion process in advance, and an initial housing 103 can be obtained after an upper mold and a lower mold are closed.

Optionally, the housing 103 itself has an internal cavity, in which structures such as web plate can be typically arranged to support the housing 103. After closing the mold, the housing 103 has an inner surface and outer surface that are opposite to each other. The present application is directed to a mounting method for adhering the heating prefabricated member 20 to the outer surface, the object of the mounting method is to adhere the heating prefabricated member 20 to the outer surface of the housing 103 to complete the maintenance work later.

Optionally, the heating prefabricated member 20 that is adhered in this embodiment is a prefabricated structure, which means that the heating prefabricated member 20 and the housing 103 are two separate components. After separately forming the heating prefabricated member and the housing, the heating prefabricated member 20 can be adhered to the outer surface of the housing 103 to form an integrated blade structure.

In step S2, referring to Fig. 13, optionally, the adhesive portion 26 can be arranged on the provided housing 103, or the adhesive portion 26 can be pre-arranged on the provided heating prefabricated member 20, both of the above arrangements are aimed at adhering the heating prefabricated member 20 to the outer surface of the housing 103. Optionally, the adhesive portion 26 can be made of the structural adhesive or other materials, and applied to the outer surface of the housing 103, specifically at the position to be adhered of the heating prefabricated member 20.

Subsequently, in step S3, referring to Fig. 14, the preformed heating prefabricated member 20 can be adhered to the outer surface through the intermediate adhesive portion 26, so that a preliminary connection between the heating prefabricated member 20 and the housing 103 can be formed.

Optionally, according to different actual needs, the heating prefabricated portions 20 with different areas can be adhered on the outer surface to cover the outer surface with a larger area to meet actual needs. The specific quantity and area need to be determined according to the actual situation.

After preliminarily adhering the heating prefabricated member 20 to the housing 103, in step S4, referring to Fig. 22, the heating prefabricated member 20 can be enveloped with the vacuum sealing member 70, so that the vacuum sealing member and the housing 103 can enclose to form a sealing cavity. The heating prefabricated member 20 can be arranged in the sealing cavity. The function of the sealing cavity is to pump and vacuum the sealing cavity in step S5. After forming negative pressure, the external atmospheric pressure squeezes the vacuum sealing member 70, and then squeezes the internal heating prefabricated member 20 onto the housing 103, so that the adhesion process of the heating prefabricated member 20 can be completed.

In the mounting method of the heating prefabricated member provided in the embodiment of the present application, by arranging the vacuum sealing member 70 on the housing 103 and enclosing with the outer surface to form the sealing cavity, the process of sealing the heating prefabricated member 20 pre-adhered to the housing 103 can be completed. In the subsequent process of pumping and vacuuming the sealing cavity, the external atmospheric pressure can be used to squeeze the heating prefabricated member 20 in the sealing cavity by means of the vacuum negative pressure in the sealing cavity, until the heating prefabricated member is tightly bonded to the adhesive portion 26, so that the heating prefabricated member 20 can be stably adhered to the housing 103, thereby completing the maintenance process of the blade. In this process, when the vacuum sealing member 70 encloses and forms the sealing cavity, only sealing portions 75 need to be adhered and arranged on two sides in the length direction of the vacuum sealing member to engage with each other and form the sealing cavity. Then the heating prefabricated member 20 can be pumped and vacuumed by vacuum sealing member 70, so as to avoid the need to adhere multiple parts of the housing 103 to form the sealing cavity during working at heights, reduce the use of sealing portions 75, simplify the process steps, reduce the difficulty of the process, facilitate form the sealing cavity by utilizing the vacuum sealing members 70, and obtain a higher efficiency in maintaining the blade. At the same time, the principle of vacuum sealing extrusion can be used to adhere the heating prefabricated member 20 more fully, so that the structure can be more reliable, the adhesion of the heating prefabricated member 20 can be more stable, and the risk of unstable structural adhesion can be reduced.

In the mounting method of the heating prefabricated member provided in the embodiment of the present application, by arranging the heating prefabricated member 20 and adhering the heating prefabricated member to the housing 103 by using the vacuum formed by the vacuum sealing member 70, the blade can have the function of heating and deicing, so as to facilitate maintenance during the freezing season.

As an optional embodiment, after the step of performing the vacuum pumping treatment on the sealing cavity, the mounting method further includes: heating and curing the adhesive portion 26.

After adhering the heating prefabricated member to the housing 103 by means of the vacuum pumping treatment, in order to improve the stability of the adhesion between the prefabricated member and the housing 103, it is necessary to heat and cure the adhesive portion 26 between the heating prefabricated member to the housing, so as to form a reliable adhesion between the heating prefabricated member to the housing.

Optionally, the heating method that the electric-heating blanket can be used to cover the adhesive portion 26, such as maintaining the temperature above 70 °C for more than 5 hours, can be adopted, so as to achieve curing the adhesive portion 26. The specific curing method will not be specifically limited in the present application.

In the mounting method of the heating prefabricated member provided in the embodiment of the present application, by heating and curing the adhesive portion 26, the stability of the adhesion between the heating prefabricated member and the housing 103 can be improved, the structural strength can be higher, and the risk of detachment of the prefabricated member during operation can be reduced.

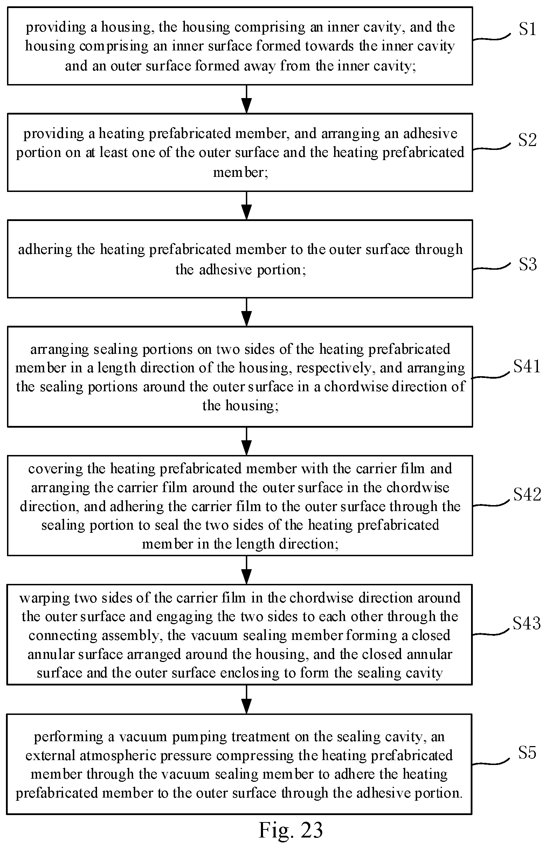

As an optional embodiment, referring to Figs. 23 to 26, the vacuum sealing member 70 includes a carrier film 73 and a connecting assembly. The connecting assembly is arranged on the carrier film 73. The step of enveloping a vacuum sealing member 70 on the side of the heating prefabricated member 20 away from the adhesive portion 26, and forming the sealing cavity between the vacuum sealing member 70 and the outer surface to enclose the heating prefabricated member 20 includes:

S41. arranging the sealing portions 75 on two sides of the heating prefabricated member 20 in the length direction of the housing 103, respectively, and arranging the sealing portions 75 in the chordwise direction of the housing 103 around the outer surface;

S42. covering the heating prefabricated member 20 with the carrier film 73, wrapping the carrier film around the outer surface in the chordwise direction, and adhering the carrier film 73 to the outer surface through the sealing portions 75 to seal two sides of the heating prefabricated member 20 in the length direction; and

S43. wrapping the carrier film 73 around the outer surface on two sides in the chordwise direction, and then engaging the carrier film through the connecting assembly, so that the vacuum sealing member 70 can be form as a closed annular face around the housing 103, and the closed annular face encloses with the outer surface to form the sealing cavity.

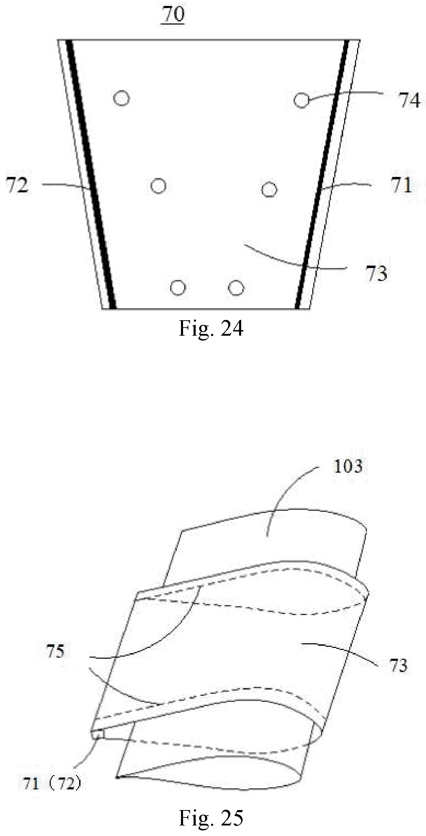

In the process of forming the sealing cavity through the vacuum sealing member 70, specifically in step S41, referring to Fig. 25, firstly, the sealing portions 75 are arranged on two sides of the pre-adhered heating prefabricated member 20. Optionally, the sealing portions 75 can be made of the sealant material and are arranged around the outer surface of the housing 103 for one full turn.

Subsequently, in step S42, the carrier film 73 of the vacuum sealing member 70 covers the outer surface and the carrier film is adhered to the housing 103 through the sealing portions 75, so as to ensure that the carrier film 73 is tightly bonded to the housing 103 at the sealing portions 75 to form a seal. In this way, the heating prefabricated member 20 on both sides in the length direction can be sealed under the action of the carrier film 73 and the sealing portions 75.

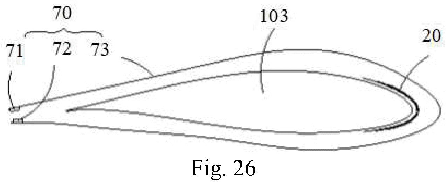

On this basis, in step S43, referring to Fig. 26, the carrier film 73 is continued to enclose the housing 103 for one full turn, two sides of the carrier film 73 in the chordwise direction can be engaged with each other through the connecting assembly. The connecting assembly can serve as connecting and sealing, and the final vacuum sealing member 70 forms the closed annular face.

The specific structure of the sealing cavity is as follows: the carrier film 73 of the vacuum sealing member 70 covers the heating prefabricated member 20 and enclose the outer surface of the housing 103 for one full turn. The two sides of the carrier film 73 in the length direction can be sealed by adhering sealing portions 75 to the housing 103. Then, two side of the carrier film can be engaged with each other through the connecting assembly on the carrier film 73, and the closed annular face can be formed and enclose together with the housing 103 to form the sealing cavity. The heating prefabricated member 20 is located in the sealing cavity.

The mounting method of the heating prefabricated member provided by the embodiments of the present application provides a forming method for forming the sealing cavity on the housing 103 by using the vacuum sealing member 70, thereby ensuring the sealing effect of the sealing cavity and facilitating the vacuum pumping process of the sealing cavity. At the same time, in the process of forming the sealing cavity, only sealing portions 75 are arranged on two sides of the carrier film 73 in the length direction to form the seal, the total number of sealing portions 75 can be reduced, the process steps can be simplified, the operation can be more convenient, the labor amount during working at heights can be reduced, and the overall adhesive efficiency can be improved.

As an optional embodiment, referring to Figs. 24 to 26, the sealing effect of the sealing cavity can facilitate the vacuum pumping process of the sealing cavity. At the same time, in the process of forming the sealing cavity, only sealing portions 75 are arranged on two sides of the carrier film 73 in the length direction to form the seal. The step of engaging two sides of the carrier film 73 in chordwise direction after wrapping includes:

wrapping one of the first engaging portion 71 and the second engaging portion 72 around the outer surface in the chordwise direction relative to the other of the two portions until they are in contact with each other; and

forming an engagement by utilizing the cooperation between the first engaging portion 71 and the second engaging portion 72.

Optionally, the specific structure of the connecting assembly includes the first engaging portion 71 and the second engaging portion 72 arranged on two sides of the carrier film 73. When the carrier film 73 is wrapped around the housing 103 for one full turn, specifically the first engaging portion 71 and the second engaging portion 72 are engaged with each other, the carrier film 73 can form the closed annular face and finally obtain the closed structure of the sealing cavity.

In the mounting method of the heating prefabricated member provided in the embodiment of the present application, by engaging the first engaging portion 71 and the second engaging portion 72 with each other, the sealing of the sealing cavity can be achieved, so that it is easier for working personnel to complete the sealing process of the sealing cavity. The structure is simple and easy to operate, and has high feasibility.

The structure of the first engaging portion 71 and the second engaging portion 72 can take various forms, so that the connection between the first engaging portion and the second engaging portion can be formed to obtain the carrier film 73 which has two sides engaged with each other. Optionally, the first engaging portion 71 and the second engaging portion 72 includes two clamping chain structures, respectively. The step of forming the connection by utilizing the cooperation between the first engaging portion 71 and the second engaging portion 72 includes: interlocking the two clamping chain structures with each other.

In the mounting method of the heating prefabricated member provided in the embodiment of the present application, the first engaging portion 71 and the second engaging portion 72 can be arranged as the clamping chain structures, thereby facilitating the connection between two sides of the carrier film 73 with each other by the working personnel, improving the convenience of sealing, and satisfying the sealing requirement.

As an optional embodiment, referring to Fig. 24, the vacuum sealing member 70 includes an air-extracting pump, and a surface of the vacuum sealing member 70 is provided with an air-extracting port 74. The air-extracting pump is inserted into the air-extracting port 74, and the steps of performing the vacuum pumping treatment on the sealing cavity includes: turning on the air-extracting pump, and discharging the air inside the sealing cavity through the air-extracting pump.

In this embodiment, the air-extracting port 74 is pre-formed on the vacuum sealing member 70, and the air-extracting pump is inserted into the air-extracting port 74. Optionally, the air-extracting pump can be a micro pump. When the air-extracting pump starts working, it can automatically perform air-extracting process without the intervention of the working personnel or the support of the work platform. At this time, the work platform can be transferred to other work regions, so as to improve the utilization rate of the work platform.

After wrapping the vacuum sealing member 70 around the housing 103 to form the sealing cavity, the air-extracting pump carried by itself can be turned on. The air-extracting pump exhausts the air in the sealing cavity through the air-extracting port 74, thereby forming a vacuum negative pressure state in the sealing cavity. The vacuum sealing member 70 gradually compresses the internal heating prefabricated member 20, thereby adhering the heating prefabricated member to the housing 103.

In the mounting method of the heating prefabricated member provided in the embodiment of the present application, by arranging the air-extracting port 74 and the air-extracting pump on the vacuum sealing member 70, the sealing can be formed, which can provide a sufficient activity space for the working personnel, and save the workload of the working personnel. In addition, by implementing the measures such as arranging the vacuum sealing member, the occupation space of the external device can be reduced, more space on the work platform can be saved. Therefore, the sufficient activity space for the working personnel can be saved, the workload of the working personnel can be saved. Furthermore, the vacuum sealing member 70 has higher integration, which can simplify the process steps, reduce the process difficulty, and improve the overall maintenance efficiency.

As an optional embodiment, referring to Fig. 24, the vacuum sealing member 70 includes a plurality of vacuum pumps, and a plurality of air-extracting ports 74 are arranged on the surface of the vacuum sealing member 70. The plurality of air-extracting ports 74 are spaced apart from each other. The step of performing the vacuum pumping treatment on the sealing cavity includes: simultaneously turning on all vacuum pumps to exhaust the air insides the sealing cavity.

Optionally, in this embodiment, the plurality of air-extracting ports 74 and the plurality of vacuum pumps are provided on the vacuum sealing member 70. When the sealing cavity is formed, all vacuum pumps can be turned on simultaneously during the vacuum pumping process, thereby allowing the vacuum pumps to simultaneously pump the sealing cavity and accelerate the vacuum pumping rate.

In the mounting method of the heating prefabricated member provided in the embodiment of the present application, by arranging the plurality of vacuum pumps on the vacuum sealing member 70 and simultaneously performing the vacuum pumping process, the pumping rate can increase, and the higher exhaust efficiency can be obtained, so that the vacuum sealing member can be bonded and squeezed to the heating prefabricated member 20 faster.

As an optional embodiment, before the step of providing the heating prefabricated member 20, and arranging an adhesive portion 26 on at least one of the outer surface and the heating prefabricated member 20, a manufacturing method includes: grinding the outer surface.

Before arranging the adhesive portion 26 on the outer surface of the housing 103, in order to better adhere the adhesive portion 26 to the outer surface, the outer surface can be grinded to provide a clean and flat surface for the adhesive portion 26, so as to form a better adhesion with the housing 103.

In the manufacturing method of the blade provided by an embodiment of the present application, by grinding the outer surface of the housing 103, a more stable adhesion between the adhesive portion 26 and the housing 103 can be formed, so that the adhesive ability of the adhesive portion 26 can be improved, and the reliability of the adhesion between the heating prefabricated member and the housing 103 can be higher.

As an optional embodiment, the step of providing the heating prefabricated member 20, and arranging an adhesive portion 26 on at least one of the outer surface and the heating prefabricated member 20 includes:
applying the adhesive portion 26 with the first predetermined thickness range on the outer surface; and
grinding the adhesive portion 26 to form a flat surface away from the surface of the housing 103.

Optionally, after arranging the adhesive portion 26 on the outer surface of the housing 103, the tool can be used to grind the surface of the adhesive portion 26 to be flat, so that the adhesive portion has a more flat surface, which is convenient for adhering the heating prefabricated member to the adhesive portion.

Optionally, the first predetermined thickness range includes 2-5mm, and the thickness of the adhesive portion 26 can be controlled within this range, so that it can ensure the adhesion between the adhesive portion and the heating prefabricated member, prevent the unnecessary losses caused by excessive adhesive portion 26, and meet the basic adhesive conditions of the heating prefabricated member.

In the manufacturing method of the blade provided by an embodiment of the present application, by adjusting the structure of the adhesive portion 26, the adhesive portion can be adhered to the heating prefabricated member better, thereby improving the reliability of adhesion between the adhesive portion and the heating prefabricated member.

As shown in Fig. 24, an embodiment of the present application provides the vacuum sealing member 70, including the carrier film 73 and the connecting assembly. The carrier film 73 has the air-extracting port 74, and the vacuum sealing member 70 can exhaust the air through the air-extracting port 74. The connecting assembly includes the first engaging portion 71 and the second engaging portion 72, which are arranged on two sides of the carrier film 73 in a width direction of itself, respectively. Among them, the vacuum sealing member 70 has a first state and a second state. In the first state, the first engaging portion 71 and the second mating portion 72 are opposite to each other in the width direction. In the second state, the carrier film 73 is wound in the width direction, and the first engaging portion 71 and the second engaging portion 72 are engaged with each other to form the closed annular face of the carrier film 73.

Optionally, the width of one side of the carrier film 73 in its own length direction is larger than the width of the other side. In the first state, the carrier film 73 is of a trapezoidal structure. In the process of wrapping the housing 103 with the carrier film 73, the size of the housing 103 in the length direction gradually changes, and the size gradually decreases in a direction from the blade root to the blade tip. In order to better adapt to the actual structure of the housing 103, the carrier film 73 in this embodiment can be set as a trapezoidal structure with the gradually changing lengths.

By utilizing the trapezoidal structure of the carrier film 73, the short side of the carrier film is located near the blade tip, and the long side of the carrier film is located near the blade root. The carrier film is wrapped around the housing 103, and ultimately forms a tight bonding with the housing 103 at all positions of the housing 103, so that the sealing cavity can have a better sealing performance.

Optionally, the vacuum sealing member 70 further includes the air-extracting pump, which is inserted into the air-extracting port 74. The air-extracting pump is configured to extract air within the closed annular face of the carrier film 73 in the second state.

In this embodiment, the air-extracting pump can be integrated into the air-extracting port 74 of the carrier film 73, so that the vacuum sealing member 70 can be formed an integrated structure with the vacuum pumping function, which can have the multi-functionality of vacuum pumping, avoid the process of external pumping device, have the higher pumping efficiency.

Optionally, each of the first engaging portion 71 and the second engaging portion 72 includes the clamping chain structure. In the second state, the first engaging portion 71 and the second engaging portion 72 can be interlocked with each other to form an engagement. When two sides of the carrier film 73 surround the housing 103 and are engaged with each other, the clamping chain structures of the first engaging portion 71 and the second engaging portion 72 can be utilized to achieve the engagement. The structure is simple and convenient to seal the sealing cavity for the working personnel.

Optionally, the carrier film 73 is provided with the plurality of air-extracting ports 74 spaced apart from one another. In order to improve the vacuum pumping rate of the sealing cavity, the plurality of air-extracting ports 74 on the carrier film 73 can be utilized to simultaneously perform the vacuum pumping treatment on the sealing cavity, so that the maintenance efficiency can be higher and the rate of the maintenance progress can be accelerated.

An embodiment of the present application provides the mounting method of the heating prefabricated member and the vacuum sealing member. By arranging the vacuum sealing member on the housing and enclosing with the outer surface to form the sealing cavity, the process of sealing the heating prefabricated member pre-adhered to the housing can be completed. In the subsequent process of pumping and vacuuming the sealing cavity, the external atmospheric pressure can be used to squeeze the heating prefabricated member in the sealing cavity by means of the vacuum negative pressure in the sealing cavity, until the heating prefabricated member is tightly bonded to the adhesive portion, so that the heating prefabricated member can be stably adhered to the housing, thereby completing the maintenance process of the blade. In this process, when the vacuum sealing member encloses and forms the sealing cavity, only sealing portions need to be adhered and arranged on two sides in the length direction of the vacuum sealing member to engage with each other and form the sealing cavity. Then the heating prefabricated member can be pumped and vacuumed by vacuum sealing member, so as to avoid the need to adhere multiple parts of the housing to form the sealing cavity during working at heights, reduce the use of sealing portions, simplify the process steps, reduce the difficulty of the process, facilitate form the sealing cavity by utilizing the vacuum sealing members, and obtain a higher efficiency in maintaining the blade. At the same time, the principle of vacuum sealing extrusion can be used to adhere the heating prefabricated member more fully, so that the structure can be more reliable, the adhesion of the heating prefabricated member can be more stable, and the risk of unstable structural adhesion can be reduced.

Those skilled in the art should understand that the aforementioned embodiments are exemplary rather than restrictive. Different technical features appearing in different embodiments can be combined to achieve beneficial effects. Based on the study of the drawings, description and claims, those skilled in the art should be able to understand and implement other variations of the disclosed embodiments. In the claims, the term "comprising" does not exclude other devices or steps; when an item is not modified by a quantifier, it is intended to include one/a kind or the plurality of/kinds of items, and can be used interchangeably with "one/a or a plurality of/multiple items"; the terms "first", "second", and the like are used to indicate names rather than to represent any specific order. Any reference numerals in the claims should not be understood as limiting the scope of protection. The functions of the plurality of portions appearing in the claims can be implemented by a single hardware or software module. The presence of certain technical features in different dependent claims does not mean that these technical features cannot be combined to achieve beneficial effects.

## Claims

1. A heating prefabricated member for heating a blade of a wind turbine set, wherein the heating prefabricated member (20) comprises a heating portion (21) and a first protective portion (23), the first protective portion (23) and the heating portion (21) are stacked, the first protective portion (23) covers the heating portion (21), the heating prefabricated member (20) is connected to the blade (100) through the heating portion (21), and the heating portion (21) is configured to provide heat to the blade (100).

2. The heating prefabricated member according to claim 1, wherein the heating prefabricated member (20) further comprises a first connecting portion (22), the first connecting portion (22) and the heating portion (21) are stacked, and the first connecting portion (22) is arranged on a side of the heating portion (21) away from the first protective portion (23).

3. The heating prefabricated member according to claim 2, wherein the first protective portion (23) and the first connecting portion (22) comprise glass cloths, and the heating portion (21) comprises a resistance wire.

4. The heating prefabricated member according to claim 1, further comprising a conductive prefabricated member (30), wherein the conductive prefabricated member (30) comprises a conductive portion and a second protective portion, the second protective portion and the conductive portion are stacked, the second protective portion covers the conductive portion, and the conductive portion is configured to be connected to the heating prefabricated member (20) and transmit current.

5. The heating prefabricated member according to claim 4, wherein the conductive prefabricated member (30) further comprises a second connecting portion, the second connecting portion and the conductive portion are stacked, the second connecting portion is arranged on a side of the conductive portion away from the second protective portion, the second protective portion and the second connecting portion comprise glass cloths, and the conductive portion comprises a conductive wire.

6. A heating portion for heating a housing (100) of a blade of a wind turbine set, wherein the housing (100) comprises a first region (106) and a second region (107), the first region (106) comprises a windward region, and the second region (107) comprises a leeward region;
the heating portion (21) comprises:
a first heating section (211) and a second heating section (212) spaced apart from each other, the first heating section (211) is arranged in the first region (106), and the second heating section (212) is arranged in the second region (107).

7. The heating portion according to claim 6, wherein a thermal power density of the first heating section (211) is higher than a thermal power density of the second heating section (212).

8. The heating portion according to claim 6, wherein the first heating section (211) and/or the second heating section (212) comprises a plurality of heating sections (213), and the plurality of heating sections (213) are connected in series.

9. The heating portion according to claim 7, wherein the first heating section (211) and/or the second heating section (212) comprises a plurality of heating sections (213), the plurality of heating sections (213) are spaced apart from one another in a length direction of the blade, and a thermal power density of the plurality of heating sections (213) gradually increases in a direction from a blade root (101) to a blade tip (102).

10. A deicing device, comprising a plurality of heating prefabricated members (20) according to any one of claims 1-5, and the plurality of heating prefabricated members (20) being connected in parallel, or comprising a plurality of heating portions (21) according to any one of claims 7-9, and the plurality of heating portions (21) being connected in parallel.

11. A mounting method of a heating prefabricated member, comprising:
providing a housing (103), the housing (103) comprising an internal cavity, and the housing (103) comprising an inner surface formed towards the internal cavity and an outer surface formed away from the internal cavity;
providing a heating prefabricated member (20), and arranging an adhesive portion (26) on at least one of the outer surface and the heating prefabricated member (20), the heating prefabricated member (20) being configured to provide heat to the housing (103);
adhering the heating prefabricated member (20) to the outer surface through the adhesive portion (26); and
fixing the heating prefabricated member (20) onto the housing (103) by a binding portion (40), and bonding the heating prefabricated member (20) to the outer surface of the housing (103) through the adhesive portion (26).

12. The mounting method according to claim 11, wherein before the fixing the heating prefabricated member (20) onto the housing (103) by the binding portion (40), and bonding the heating prefabricated member (20) to the outer surface of the housing (103) through the adhesive portion (26), the mounting method further comprises:
arranging a crimping portion (50) on a side of the heating prefabricated member (20) away from the adhesive portion (26).

13. The mounting method according to claim 12, wherein the fixing the heating prefabricated member (20) onto the housing (103) by the binding portion (40), and bonding the heating prefabricated member (20) to the outer surface of the housing (103) through the adhesive portion (26) comprises:
covering at least a portion of the crimping portion (50) with the binding portion (40); and
fixing the crimping portion (50) onto the heating prefabricated member (20) by the binding portion (40), and pressing and engaging the heating prefabricated member (30) onto the adhesive portion (26) through the crimping portion (50).

14. The mounting method according to claim 12, wherein the arranging the crimping portion (50) on the side of the heating prefabricated member (20) away from the adhesive portion (26) comprises:
providing the crimping portion (50), comprising a plurality of support bars (51); and
adhering each of the plurality of support bars (51) to the heating prefabricated member (20) in a length direction (X) of the housing (103), and each adjacent two of the plurality of plurality of support bars (51) being spaced apart from each other in an extending direction of a curved surface of the housing (103).

15. The mounting method according to claim 11, wherein after the fixing the heating prefabricated member (20) onto the housing (103) by the binding portion (40), and bonding the heating prefabricated member (20) to the outer surface of the housing (103) through the adhesive portion (26), the mounting method further comprises: heating and curing the adhesive portion (26).

16. The mounting method according to claim 15, wherein the heating and curing the adhesive portion (26) comprises:
arranging an electric-heating blanket on the outer surface of the housing (103), and the electric-heating blanket covering the adhesive portion (26) on the outer surface; and
supplying electricity to the electric-heating blanket to maintain a temperature of the electric-heating blanket above a first threshold and continuously heat the adhesive portion (26) for a first predetermined time period.

17. A mounting method of a heating prefabricated member of a blade, comprising:
providing a housing (103), the housing (103) comprising an internal cavity, and the housing (103) comprising an inner surface formed towards the internal cavity and an outer surface formed away from the internal cavity;
providing a heating prefabricated member (20), and arranging an adhesive portion (26) on at least one of the outer surface and the heating prefabricated member (20);
adhering the heating prefabricated member (20) and the outer surface together through the adhesive portion (26);
enveloping a vacuum sealing member (70) on a side of the heating prefabricated member (20) away from the adhesive portion (26), and forming a sealing cavity between the vacuum sealing member (70) and the outer surface to enclose the heating prefabricated member (20); and
performing a vacuum pumping treatment on the sealing cavity, an external atmospheric pressure compressing the heating prefabricated member (20) through the vacuum sealing member (70) to adhere the heating prefabricated member (20) to the outer surface through the adhesive portion (26).

18. The mounting method according to claim 17, wherein after the step of performing a vacuum pumping treatment on the sealing cavity, the mounting method further comprises: heating and curing the adhesive portion (26).

19. The mounting method according to claim 17, wherein the vacuum sealing member (70) comprises a carrier film (73) and a connecting assembly, and the connecting assembly is arranged on the carrier film (73);
the enveloping the vacuum sealing member (70) on the side of the heating prefabricated member (20) away from the adhesive portion (26), and forming the sealing cavity between the vacuum sealing member (70) and the outer surface to enclose the heating prefabricated member (20) comprises:
arranging sealing portions (75) on two sides of the heating prefabricated member (20) in a length direction of the housing (103), respectively, and arranging the sealing portions (75) around the outer surface in a chordwise direction of the housing (103);
covering the heating prefabricated member (20) with the carrier film (73) and arranging the carrier film (73) around the outer surface in the chordwise direction, and adhering the carrier film (73) to the outer surface through the sealing portion (75) to seal the two sides of the heating prefabricated member (20) in the length direction; and
warping two sides of the carrier film (73) in the chordwise direction around the outer surface and engaging the two sides to each other through the connecting assembly, the vacuum sealing member (70) forming a closed annular surface arranged around the housing (103), and the closed annular surface and the outer surface enclosing to form the sealing cavity.

20. A blade, wherein the blade is provided with the heating prefabricated member according to any one of claims 1-5, or the heating portion according to any one of claims 6-9, or a deicing device mounted by the mounting method according to any one of claims 11-16, or the blade is maintained by the mounting method according to any one of claims 17-19.

21. A wind turbine generator set, wherein the wind turbine generator set comprises the blade according to claim 20.
